# EUROPEAN PATENT APPLICATION

(11) **EP 1 613 022 A1**
(43) Date of publication of application: **04.01.2006**
(21) Application number: 04030152.5
(22) Date of filing: 20.12.2004
(51) Int. Cl.: H04L 29/12, H04L 12/56

(54) **System and method for changing subnet masks for altering routing of messages between terminals in the same local area network**

(30) Priority: 28.06.2004 KR 2004049152
(71) Applicant: Ezibro Networks Ltd., Seocho-gu Seoul 137-841 (KR)
(72) Inventor: Park, Sunghyun, Jongno-gu Seoul 110-044 (KR); Kim, Jingyu, Nowon-gu Seoul 139-220 (KR); Choi, Giseol, Dongan-gu Anyang-si Gyeonggi-do 431-080 (KR); Kim, Ilhwan, Yongin-si Gyeonggi-do 449-961 (KR)
(74) Representative: TER MEER - STEINMEISTER & PARTNER GbR

(57) **Abstract**

An intra-edge routing-less IP communication device and communication method using the same, in a multi-subnet edge network on a single LAN segment in which there are a plurality of premises hosts some of which originally belong to subnets different from those of the others. The communication device comprises a DHCP proxy server for changing an IP configuration information including a subnet mask contained in a DHCP response message provided from an original DHCP server, thereby making the plurality of GIP hosts and LIP hosts believe that they belong to the same subnet, and a subnet-aware ARP proxy server, which is capable of being aware of true subnets of the plurality of client premises hosts and of the MAC addresses of the default gateways thereof, for virtually recovering the true subnets when the plurality of client premises hosts broadcast ARP Request for a remote host misunderstood to exist in the same subnets owing to the changed subnet mask, by giving the MAC address of the default gateway corresponding to one of the plurality of client premises source hosts.

## Description

### CROSS REFERENCE TO RELATED APPLICATIONS

This application claims priority from Korean Priority Document 10-2004-0049152, filed on June 28, 2004, which is hereby incorporated by reference in its entirety.

### FIELD OF THE INVENTION

The present invention relates to an IP (Internet Protocol) communication device and a communication method using the same. And more particularly the present invention relates to an IP communication device for enabling intra-edge routing-less communication between the premises hosts some of which originally belong to subnets different from those of the others on a single LAN (Local Area Network) segment and for smoothly performing a connection of the premises hosts to an internet without a trouble, and a communication method using the same.

### BACKGROUNDS OF THE INVENTION

The IP communication is widely and rapidly expanding far beyond PCs and servers. Various kinds of devices and equipments are becoming intelligent and need IP connectivity. This trend is called "All-IP". Ubiquitous life or digital home networking actually means the all-IP environment.

However, the IP addresses for the IP communication are running out and becoming scarce. With current Internet Protocol version 4 (IPv4) address scheme, there are only 2^32 addresses. 2^29 addresses of the total are for multi-casting and testing, which means that 2^29 addresses are not to be assigned to the ordinary hosts.

Some of the experts argue that Internet Protocol version 6 (IPv6) address scheme can solve this address scarcity issue. However, the migration from the current IPv4 address scheme to the IPv6 scheme is a very long-term process since the migration relates to the change of communication mode and application software in every host. Until the migration is fully completed, an IPv6 host still needs an IPv4 address to communicate with numerous IPv4 hosts already existing.

There are two types of IPv4 addresses: GIP (Global IP) addresses and LIP (Local IP) addresses. The GIP addresses are globally routable while the LIP addresses are not routable. The GIP addresses provide flawless Internet connectivity but are scarce because the GIP addresses are globally unique. The LIP addresses are highly available, since numerous homes and offices can use the same LIP addresses; the LIP addresses only need to be locally unique in the premises, office or edge network. There are three blocks of LIP addresses defined by the Internet standards. The first block is from 10.0.0.0 to 10.255.255.255 and 2^24 addresses (hereafter, referred to as "10.x.x.x LI P address block"). The second block is 172.16.0.0 ∼172.31.255.255 and 2^20 addresses (hereafter, referred to as "172.16~31 LIP address block"). The third block is from 192.168.0.0 ~192.168.255.255 and 2^16 addresses (hereafter, referred to as "192.168 LIP address block").

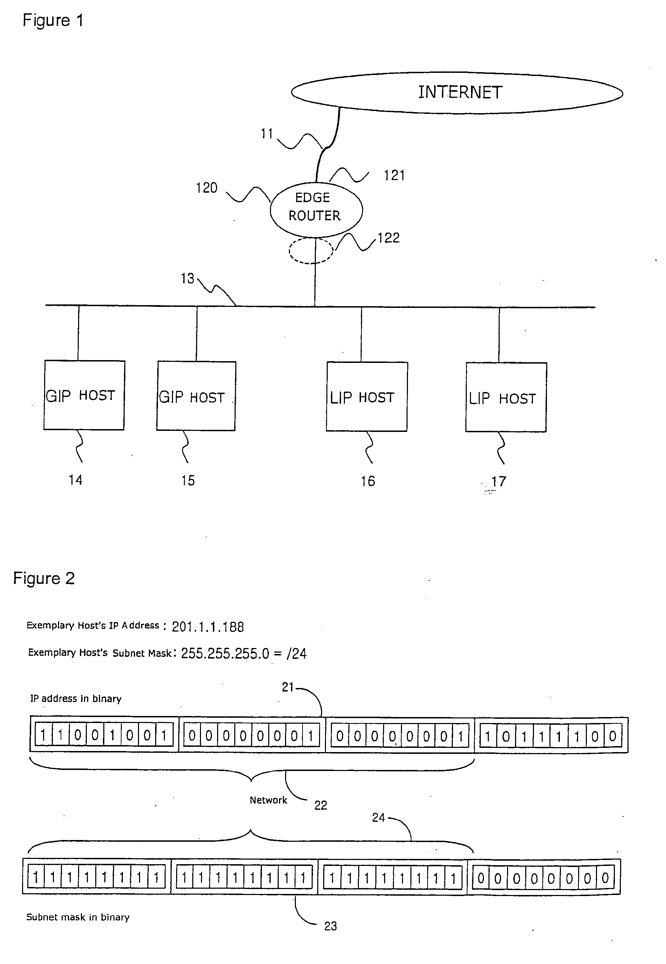

One of effective ways for overcoming the address scarcity issue is Network Address Translation (NAT). The IP communication via NAT is shown in Fig. 1 through Fig. 3.

Fig. 1 is a block diagram showing a multi-subnet edge network on a single LAN segment. The term "multi-subnet edge network" in this disclosure means an edge network where the GIP hosts and the LIP hosts exist together on a single LAN segment and interoperate with each other, unless specified otherwise, wherein the subnet of the GIP addresses assigned to the GIP hosts is different from that of the LIP addresses assigned to the LIP hosts. The term "edge network" is the smallest network unit covered by an edge router. The edge network can be a large office with leased line connectivity or a neighborhood comprising hundreds of homes or small offices.

An edge router **120** has a WAN (Wide Area Network) interface **121** and a LAN interface **122.** On the LAN segment **13,** there are a plurality of GIP hosts **14** and **15** and a plurality of LIP hosts **16** and **17**. And the edge router **120** serves as the default gateway for the LIP hosts and has the NAT functionality for connecting the LIP hosts to the Internet. For this purpose, the LAN interface **12**2 of the edge router **120** has a LIP address alias thereon.

The GIP hosts **14** and **15** and the LIP hosts **16** and **17** should have acquired a set of configuration information for the IP communication. The process of acquiring the configuration information is called "IP configuration" in network terminology. The IP configuration can be done manually or a server can provide the IP configuration information automatically. DHCP is a set of automatic IP configuration protocol between this server and a client host. The IP configuration information includes the address to be assigned to the host, the subnet mask for calculating the subnet of the host, the default gateway for connecting the host to the Internet, the DNS server for asking the IP address of a destination domain, and optionally, the DHCP server for automatically providing the IP configuration information. The subnet mask among the IP configuration information shows how many binary bits of the IP address relates to the subnet. The subnet is the tiniest logical IP network segment of the Internet, which is very similar to "neighborhood". For example, if my host is configured with "/24" subnet mask of the network prefix length, it means that "any host whose IP address starts with the same 24 bits with those of my host is neighbor of my host". If not, any host is considered a remote host.

Fig. 2 shows the field diagram of an exemplary IP address 201.1.1.188 whose subnet mask is /24 which represents network prefix length. As mentioned above, "/24" means that the first 24 bits of the IP address is the network part (prefix) of the IP address. In subnet calculation, this network part digits has bit "1" and the remaining part has bit "0". Thus "/24" subnet mask is actually:
11111111 11111111 11111111 00000000 **23**

If we put this binary number in a decimal number for each octet, it will be 255.255.255.0, which is quite a familiar notation. Here it is noteworthy that the GIP host and the LIP host belong to different subnets.

When the source host with the IP address of 201.1.1.188 and the subnet mask of /24 has a target destination, the source host tests whether the destination is in the same subnet. First, the source host put the "subnet mask" **23** on top of its own IP address **21** and executes an AND operation for each bit. In this example, the result is 11001001.00000001.00000001.00000000. Second, the source host puts the same subnet mask on top of the destination IP address and executes the AND operation. Third, the result of the first step is compared with the result of the second step to find out whether the destination is in the same subnet. If two results have the same value, then the destination is considered being in the same subnet. If not, the destination is considered a remote host. In other words, if the first n bits of my IP address signify my subnet, then any host whose IP address has the same value for the first n bits must be in my subnet. While any host whose IP address has a different value for the first n bits must be a remote host.

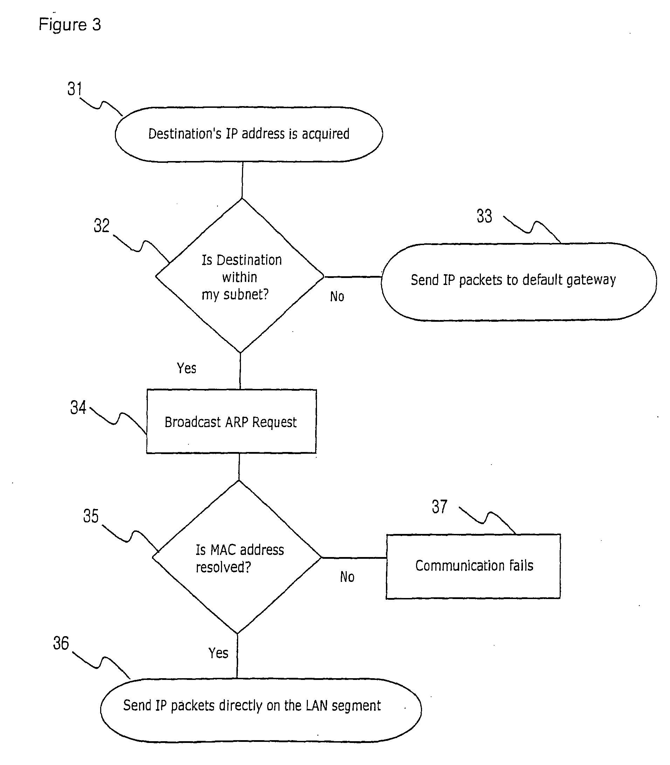

The way that an IP host approaches a target destination host within the same subnet is totally different from the method used for a remote host. With reference Fig. 3 showing the difference, when there is a target destination **31**, the first action of the source host is to decide whether the destination host is located within the subnet domain of the source host or not **32**. In case where the target destination host is a remote host, the source host sends the packets to a default gateway so that the default gateway can route the message from the source host onto the Internet **33**. If the destination host is in the subnet of the source host, then the source host sends out ARP (Address Resolution Protocol) Request messages in order to find out the MAC (Media Access Control) address of the destination **34**. The meaning of the ARP Request is "what is the hardware address (MAC address) of the host whose IP address is w.x.y.z?" If the MAC address is resolved, then the source host sends out the packet directly to the destination host **35 and 36**. If not, the communication between the source host and the destination host fails **35 and 37.** In short, each IP host is aware of its subnet and, when there is a target destination, the first step is to calculate whether the destination host is within the subnet of the source host or not. For those hosts within the subnet of the source host, the source host broadcasts ARP Request messages to find out the MAC address of the destination host. Once the MAC address of the destination host is acquired, the source host sends packets directly to the destination host without routing. On the other hand, if the destination host is a remote host, the source host sends packets to its default gateway, for routing.

NAT, which in Fig. 1 resides in the edge router **120,** enables the multiple LIP hosts to share one or a few GIP addresses. But many applications of Internet communication do not pass through NAT. NAT does not work properly when the communication session is not initiated from the local hosts or when the IP address and the port change information are included in the data payload. In short, the LIP hosts can be connected to Internet via NAT but the quality of connectivity is limited.

In order for the GIP hosts and the LIP hosts to interoperate in a multi-subnet edge, even though they are connected on the same LAN segment, the intra-edge routing for communication is necessary since the subnet of the LIP hosts is different from that of the GIP hosts. And as the IP hosts increases, it becomes more and more necessary for the edge network to assign the GIP addresses to some of hosts in the edge network and to assign the LIP addresses to the others. Thus typically the edge router in a multi-subnet edge provides the intra-edge routing between the GIP hosts and LIP hosts.

However, there are some very serious difficulties in applying a multi-subnet architecture to the edge network. First, for those small account users such as homes and small offices, the intra-edge routing is not affordable since the installation of the router needs the FGIP (Fixed GIP) Address connectivity which is very expensive. Second, the multi-subnet edge network requires a qualified network administration. Some one has to configure and administrate the router and the hosts. Thus there is an increasing need for enabling the GIP hosts and the LIP hosts on a single LAN segment to interoperate with each other without the intra-edge routing.

### SUMMARY OF THE INVENTION

It is an object of the present invention to provide an intra-edge routing-less IP communication device for interoperating GIP hosts and LIP hosts on a single LAN segment by using a falsified subnet mask much larger than the original true subnet mask value. This falsified subnet mask is a super mask, a term coined here. Super mask may be a number between /1∼ /23 in view of network prefix length; however, the preferred value is /1 in this document. Here the physically expressed decimal value of the super mask is smaller than that of the original subnet mask /24.

It is another object of the present invention to provide an intra-edge routing-less IP communication device for interoperating GIP hosts and LIP hosts on a single LAN segment by using a falsified subnet mask much larger than the original true subnet mask value, and for enabling said GIP and LIP hosts to do normal IP communication even though said GIP hosts and LIP hosts are configured with abnormal, falsified super mask.

It is still another object of the present invention to provide a communication method for without intra-edge routing, interoperating GIP hosts and LIP hosts on a single LAN segment by using a falsified subnet mask much larger than the original true subnet mask value. This falsified subnet mask is a super mask, a term coined here. Super mask according to network prefix length representation may be a number between /1~ /23; however, the preferred value is /1 in this document.

It is even still another object of the present invention to provide a communication method for without intra-edge routing, interoperating GIP hosts and LIP hosts on a single LAN segment by using a falsified subnet mask much larger than the original true subnet mask value, and for enabling said GIP and LIP hosts to do normal IP communication even though said GIP hosts and LIP hosts are configured with abnormal, falsified super mask.

A communication device for accomplishing the objects of the present invention comprises a DHCP proxy server for super mask configuration in the edge or in the premises. The purpose of super mask is intra-edge routing-less premises IP communication among a plurality of premises GIP and LIP hosts on a single LAN segment, the single LAN segment being comprised of an edge router, a NAT box and a plurality of client premises GIP and LIP hosts. The communication device with the DHCP proxy server is installed in the single LAN segment. The communication device with the DHCP proxy server manipulates and falsifies subnet mask of the plurality of client premises DGIP hosts and LIP hosts. The falsified subnet mask signifies unrealistic and abnormally large subnet to the effect that the plurality of client premises GIP hosts and LIP hosts believe that they belong to the same subnet, where the falsified, abnormal subnet mask is named as "super mask" and the falsified subnet is named as "falsified super subnet".

In detail, the DHCP proxy server comprises a table in which there is stored the following information such as a type of IP connectivity, a type of IP address and optionally an IP address value. The type of IP connectivity is to be provided for each host of a plurality of client premises hosts, the type of IP address is to be configured with each host of the plurality of client premises hosts and the IP address value is to be assigned to each host of the plurality of client premises hosts. Here the type of IP connectivity, the type of IP address and the IP address value are set by using MAC addresses of the plurality of client premises hosts as a key value, based upon an IP assignment policy setting of a network administrator. The DHCP proxy server further comprises: means for receiving the DHCP message from at least one of said plurality of client premises hosts and recognizing the IP address type to be assigned to the client host with reference to the table; means for assigning a LIP address with the falsified super mask to the client host by selecting a LIP address from a LIP address pool empowered to be managed by the IP assignment policy setting of the network administrator, when the client host is recognized as a host to be configured with a LIP address; means for forwarding the DHCP message of DHCP Discover and Request from the client host to the original DHCP server remotely installed when the client host is recognized as a host to be configured with a DGIP address; means for changing the subnet mask of the IP configuration information included in the DHCP message of Ack provided from the original DHCP server, into a super mask larger than said subnet mask value; and means for configuring the client host set for DGIP configuration, using the changed IP configuration information including the super mask.

Also, the DHCP proxy server further comprises: means for changing a DHCP server ID, which is an IP address, contained in said DHCP message of Ack provided from the original DHCP server, into an IP address of the DHCP proxy server itself, means for setting and applying a PLT (Premises Lease Time) which is adopted for the DHCP proxy server, the PLT being shorter than an OLT (Original Lease Time) which is adopted for the original DHCP server: and means for setting and applying CET (Caching Expiration Time) within which the DHCP proxy server blocks a DHCP lease renewal Request from the DGIP client host and gives a message of Ack on its own. Alternatively, the IP communication device further comprises a gateway for connecting the plurality of client premises hosts of GIP hosts to the edge router and for connecting a plurality of LIP hosts to the NAT box and the DHCP proxy server resides in said gateway. The NAT box does not exist in the premises but out of it and can serve the LIP hosts existing in multiple premises in the edge LAN segment.

Since it is possible for premises GIP hosts and LIP hosts to communicate without intra-edge routing, each of the plurality of gateways in which the DHCP proxy server resides can be configured with a LIP address. Even though the premises gateway itself is a LIP host, the premises GIP hosts as well as the LIP hosts can communicate with the gateway without routing or NAT box, since the GIP and LIP hosts including the gateway are all configured with super mask to the effect that they belong to the same falsified super subnet.

And the IP communication device further comprises a NAT box installed on the single LAN segment. The NAT box comprises an auxiliary DHCP relay module for relaying the DHCP message between the gateways which are configured with LIP addresses and the original DHCP server via the LIP interface of the NAT box and via the GIP interface of the NAT box. The NAT box comprises means for using a data link layer broadcast address or a MAC address of the gateway as a data link layer destination of the downstream DHCP packets, when relaying the DHCP messages from the original DHCP server to the plurality of gateways, on the condition that each of the plurality of gateways comprises a DLAT (Data Link Layer Translation) module for translating a source MAC address of the upstream packets to a MAC address of one of the plurality of gateways and for translating a destination MAC address of a downstream packets to a MAC address of a destination premises host.

Additionally, the communication device in accordance with the present invention, further comprises a subnet-aware ARP proxy server which is capable of being aware of true subnets of the plurality of client premises hosts consisting of GIP hosts and LIP hosts and aware of the MAC addresses of the default gateways of the plurality of client premises hosts. Thereby the subnet-aware ARP proxy server virtually recovers the true subnets decided by the subnet mask when the plurality of client premises hosts broadcast ARP Requests for a remote host misunderstood to exist in the same subnet owing to the super mask configured by the DHCP proxy server, by giving the MAC address of the default gateway corresponding to one of the plurality of client premises hosts. In detail, the subnet-aware ARP proxy server comprises: means for acquiring the true subnets of the plurality of client premises hosts; means for acquiring MAC addresses of default gateways for each of the plurality of client premises hosts; means for recognizing whether the ARP Request is for a remote host misunderstood to exist in the same subnets; and means for giving the MAC address of default gateways for the plurality of client premises hosts to corresponding client premises host, when the corresponding client premises host broadcasts a wrongful ARP Request for the remote host.

For accomplishing the objects of the present invention, in a multi-subnet edge network on a single LAN segment, the single LAN segment being comprised of an edge router, a NAT box and a plurality of client premises DGIP hosts and LIP hosts connected to the edge LAN segment, first, at least one of said plurality of clients premises hosts broadcasts DHCP messages. Then DHCP proxy server configures a host using LIP address pool which the DHCP proxy server is empowered to manage, when the client host is to be configured with a LIP address. The DHCP proxy server forwards the DHCP messages to the original DHCP server when the client host is to be configured with a DGIP address. The DHCP proxy server records in a table a DHCP response message of Ack provided from the original DHCP server in response to the DHCP message, wherein the DHCP Ack message contains an IP configuration information including subnet mask. Also, the DHCP proxy server changes the subnet mask to a super mask larger than the true subnet mask value, and configures the client host using the changed IP configuration information including the super mask. Thereafter the client host (source host) communicates with a target destination host.

When communicating between the source host and the target destination host, the source broadcasts ARP Requests for a target destination covered by the super mask. And, the subnet-aware ARP proxy server decides whether the target destination is in the true subnet of the source host decided by the original subnet mask under the condition that the subnet-aware ARP proxy server is aware of subnets decided by the subnet mask and the super mask. The subnet-aware ARP proxy server informs the source host of a MAC address of a default gateway of the source host in response to the ARP Request, in case where the ARP Request is for a remote host misunderstood to exist in the subnet decided by the subnet mask, thanks to the super mask. The client host makes a packet using the MAC address of default gateway of the source host as a data link layer destination and using an IP address of said target destination as the network layer destination. The source host sends the packet via the default gateway of the source host to the target destination.

### BRIEF DESCRIPTION OF THE DRAWINGS

A more detailed understanding of the invention is provided by the following description of preferred exemplary embodiments to be understood in conjunction with the accompanying drawing wherein:
Fig. 1 is a block diagram showing a multi-subnet edge network on a single LAN segment according to a conventional art;
Fig. 2 shows a field diagram of an IP packet and a subnet mask;
Fig. 3 is a flow chart showing subnet mask testing and address resolution by an IP host, in which two different approaches according to a kind of the destination host are illustrated, one approach being used when the destination host is a neighborhood host and the other approach being used when the destination host is a remote host;
Fig. 4 is an overview flow chart for showing a process of manipulating the IP configuration information of a DHCP (Dynamic Host Configuration Protocol) proxy server according to the present invention;
Fig. 5 is a flow chart showing an operation of a subnet-aware ARP proxy server according to the present invention;
Fig. 6 is a sequence diagram of the subnet-aware ARP proxy server according to the present invention;
Fig. 7 is a block diagram showing a single account multi-subnet edge network on a single LAN segment according to a first embodiment of the present invention where the invented DHCP proxy server and the invented subnet-aware ARP proxy are deployed;
Fig. 8 is a block diagram showing a multi-account multi-subnet edge network on a single LAN segment according to the second embodiment of the present invention where the invented DHCP proxy server and the invented subnet-aware ARP proxy server residing in a BRG (Bridge Residential Gateway) are deployed;
Fig. 9 is a table showing DHCP messages generated from the GIP hosts and their handling by the invented DHCP proxy server residing in the BRG shown in Fig. 8;
Fig. 10 is a table showing DHCP messages generated from the LIP hosts and their handling by the invented DHCP proxy server residing in a BRG shown in Fig. 8;
Fig. 11a through Fig. 11 d are a detailed flow chart showing the DHCP message handling of the invented DHCP proxy server residing in the BRG of Fig. 8;
Fig. 12a through Fig. 12d are a sequence diagram showing the DHCP message handling of the invented DHCP proxy server residing in the BRG of Fig. 8;
Fig. 13 is a block diagram showing a multi-account multi-subnet edge network on a single LAN segment according to the third embodiment of the present invention, in which the BRG is endowed with a data link layer packet filtering;
Fig. 14 is a block diagram showing a multi-account multi-subnet edge network on a single LAN segment according to the fourth embodiment of the present invention, which is the application of the second embodiment to a CMTS (Cable Modem Termination System) segment; and
Fig. 15 is a block diagram showing a multi-account multi-subnet edge network on a single LAN segment according to the fifth embodiment of the present invention, which is the application of the second embodiment to a xDSL (Digital Subscriber Line) segment.

### DETAILED DESCRIPTION OF THE INVENTION

A more complete appreciation of the invention and many of the attendant advantages thereof can be better appreciated by reference to the following detailed description and the accompanying drawings.

Capitalization is used in this disclosure to improve the readability. When a series of words is to be capitalized, the first occurring full text is followed by capitalized abbreviation in parentheses and afterwards, only the capitalized abbreviations will be used.

The present invention is applied to an edge network where there are multi-subnets on a single LAN segment. One example is an edge network where a plurality of premises GIP hosts and a plurality of LIP hosts are connected to the single LAN segment. Naturally, the premises GIP hosts belong to subnets different from those of the premises LIP hosts. With regard to this type of multi-subnets on the single LAN segment, the IP communication device in accordance with the present invention comprises a DHCP proxy server for manipulating the IP configuration information including the subnet mask which is included in the DHCP Ack message to the effect that the premises LIP hosts and the premises GIP hosts on the single LAN segment wrongfully believe that they belong to the same subnet, the DHCP Ack message being provided from an original DHCP server in response to the DHCP message requested by the client host(premises host). The manipulation of the IP configuration information includes "super-masking (subnet mask change)". The super-masking, a term coined here, is to configure both the premises GIP hosts and the premises LIP hosts with false, very large subnet mask so that they can "misunderstand" each other to belong to the same subnet, in order to eliminate intra-edge routing when the edge network contains multi-subnets on the single LAN segment. For example, with "/1" subnet mask, the premises GIP host whose IP address is in the range of 0.0.0.0 ~127.255.255.255 believes itself to belong to the same subnet with the premises LIP host whose IP address is in the range of 10.x.x.x address block, and vice versa. In case where the GIP address of the premises GIP host is in the range of 128.0.0.0∼223.255.255.255, we can use 172.16∼31 LIP address block or 192.168 address block for the premises LIP host.

The original DHCP server for automatically providing IP configuration information to the client hosts, may be deployed in an independent apparatus located on the remote Internet or in an apparatus on the edge network. Alternatively the original DHCP server may reside in the edge router of the edge network. The DHCP proxy server of the present invention is taken as the DHCP server by the premises GIP hosts and the premises LIP hosts so that it responds to the premises hosts of GIP and LIP as a DHCP server, even if not the original DHCP server. The DHCP proxy server of the present invention may reside in a gateway such as Bridge Residential home Gateway (BRG).

Also, the manipulation of the IP configuration information includes "DHCP server IP address change" and "lease time change" as well as the subnet mask change. The "DHCP server IP address change" is for the DHCP proxy server of the present invention to change the original DHCP server's IP address in the DHCP Ack message into the IP address of the gateway where the DHCP proxy server resides. Thus the premises client hosts take the gateway thereof as their DHCP server, thereby organizing the complete premises network.

The "lease time change" is for the DHCP proxy server of the present invention to change an Original Lease Time (OLT) specified in the DHCP Ack message into a much shorter Premises Lease Time (PLT). By applying a much shorter PLT in place of the OLT, users can change the IP connectivity type of the premises host very easily. Furthermore, a leased IP that is not properly released in such cases as abrupt shut down can be released within several seconds, thanks to the short PLT. On the other hand, with its lease time set for a very short period, a client host incessantly makes a renewal Request to the original DHCP server.

The DHCP proxy server of the present invention produces a renewal Ack message in response to the renewal Request of the client host, up to a certain point, for example, up to half of the OLT. Past this point, the DHCP proxy server forwards the renewal Request from the client host to the original DHCP server. This point is called CET (Caching Expiration Time), a term coined here. Preferably the CET can be set as half of the OLT, since the DHCP standard recommends the client host to make a renewal Request when half of the lease time has passed. The PLT and the CET will be in detail described in the second exemplary embodiment.

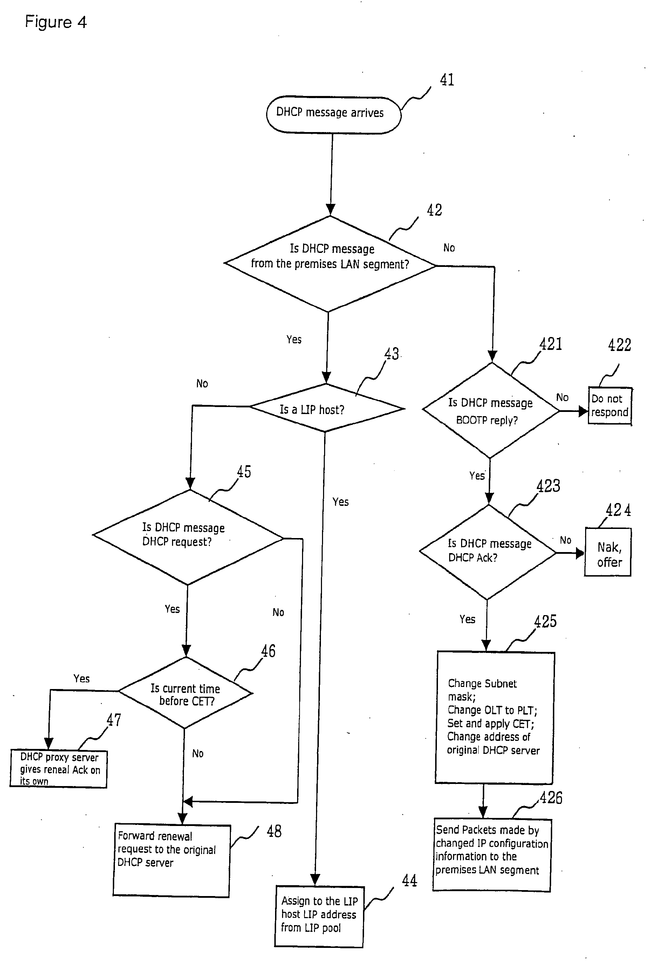

Fig. 4 shows an overview flow chart for showing a process of manipulating the IP configuration information of the DHCP proxy server according to the present invention.

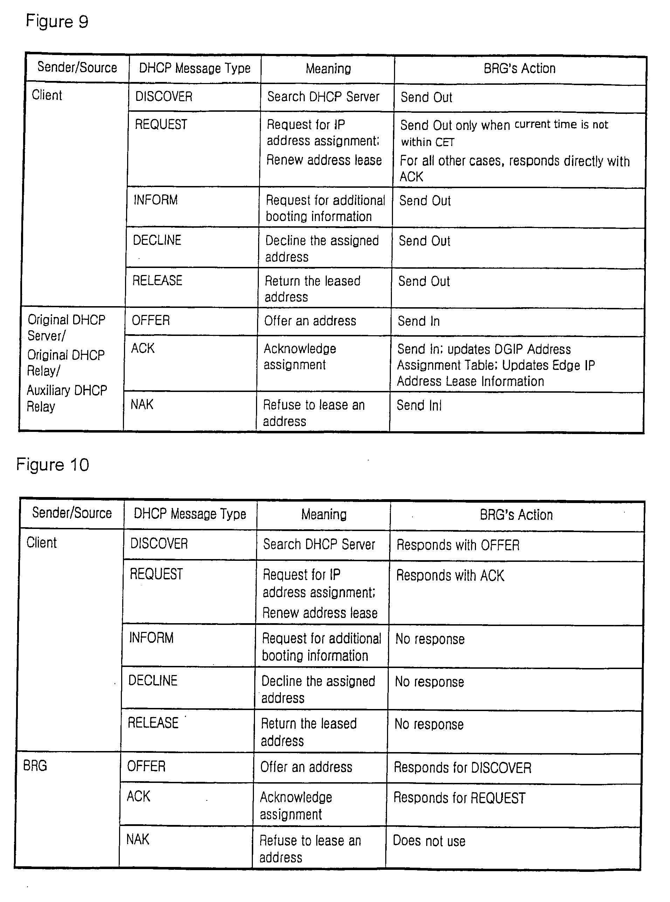

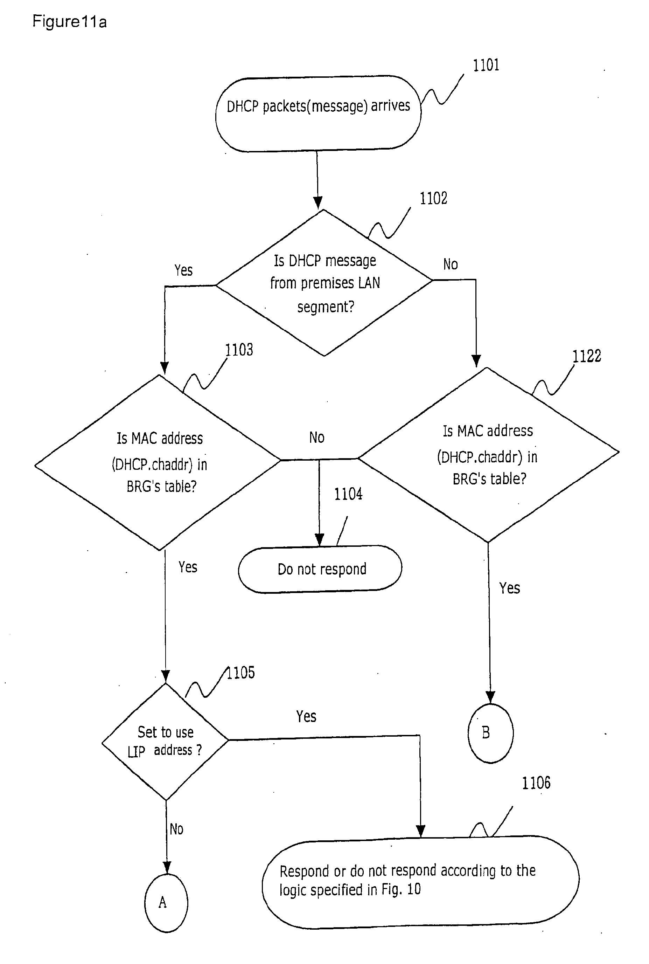

When a DHCP message arrives at the invented DHCP proxy server residing in a residential gateway **41**, the DHCP proxy server makes a decision on whether the DHCP message is from the premises LAN segment or from the edge LAN segment **42**. If the DHCP message is from the premises LAN, the DHCP proxy server makes another decision on whether the DHCP message is from a host set to be configured with a LIP address (LIP host) or from a host set to be configured with a DGIP address (GIP host) **43**. If the DHCP message is from the LIP host, the invented DHCP proxy server assigns to the LIP host the LIP address from the LIP pool allocated by the edge network administrator **44**. That is, the DHCP proxy server of the present invention responds to the DHCP request of the LIP hosts. The DHCP message handling for the LIP host by the DHCP proxy server is specified in Fig. 10. On the other hand, with regard to the step **43**, if the DHCP message is from the GIP host set to be configured with a DGIP address, the DHCP proxy server of the present invention makes a decision on whether the DHCP message is a DHCP Request or other DHCP messages such as Release or Discover **45**. If the DHCP message is a lease renewal Request, the invented DHCP proxy server finds out whether the current time is before CET **46**. If the current time is before CET, then the DHCP message must be a renewal Request, and the DHCP proxy server gives renewal Ack on its own **47**. If the current time is not before the CET, the invented DHCP proxy server forwards the renewal Request to the original DHCP server **48**. With regard to the step 45, if the DHCP message is not a Request, the invented DHCP proxy server forwards the DHCP message to the edge LAN segment **48**. On the other hand, with regard to the step **42**, if the DHCP message is from the edge LAN segment, the DHCP proxy server of the present invention decides whether the DHCP message is a BOOTP (Bootstrap Protocol) Reply **421.** If it is not, the DHCP proxy server does not respond at all **422**. If the DHCP message is the BOOTP Reply, the DHCP proxy makes a decision on whether the DHCP message is a DHCP Ack **423**. If DHCP message is not a DHCP Ack, the DHCP proxy server processes the DHCP message either as a Nak or an Offer **424**. If it is an Ack, the DHCP proxy server changes the IP configuration information **425,** after writing all the true IP configuration information in the DGIP assignment table. The DHCP proxy server changes the address of original DHCP server into the address of the gateway where the invented DHCP proxy serve resides, changes the subnet mask into a super mask, changes the OLT into the PLT and changes packet header address fields of the DHCP message and set the CET **425**. In this time, other information in the DHCP Ack message can be optionally changed. And then, the invented DHCP proxy server forwards the changed packet to the premises LAN segment, that is, to the client host and configures the client host using the changed IP configuration information **426.**

The super masking is a serious violation of the IP configuration. When a subnet mask of a host is set as "/1" of network prefix length, the host believes wrongfully that half of the Internet hosts exists in the subnet thereof. There can be about 2.1 billion remote hosts which an edge host misunderstands to be in the edge subnet. With their subnet super-masked as "/1" of network prefix length, the edge hosts can freely communicate with each other without intra-edge routing. However, the edge hosts wrongfully believe half of the remote hosts on the Internet to exist in the subnet. Accordingly when the target destination is one of these "misunderstood" hosts, the premises source broadcasts ARP Requests on the LAN segment in order to find out the MAC address of the misunderstood host and the communication fails.

The communication device in accordance with the present invention further comprises a subnet-aware ARP proxy server in order to solve this serious problem caused by the super-masking. When the edge host falsely broadcasts ARP Request for a destination host which is misunderstood to be in the subnet thereof, the subnet-aware ARP proxy server recognizes that the destination host is in actuality a remote host and virtually recovers the true subnet of the edge host by giving the MAC address of the default gateway of the edge host. Believing that the destination is in the subnet and its MAC address is resolved, the edge host sends packets to the resolved MAC address that is in fact its default gateway's MAC. From the default gateway's point of view, this packet is a totally routable, correct packet. And the communication succeeds.

For this, the invented subnet-aware ARP proxy server should be aware of the true subnets of the GIP hosts and the LIP hosts of edge hosts and the MAC address of the default gateway for each of them. The invented ARP proxy server can reside in an independent apparatus, in the edge router or in a residential gateway of the edge network.

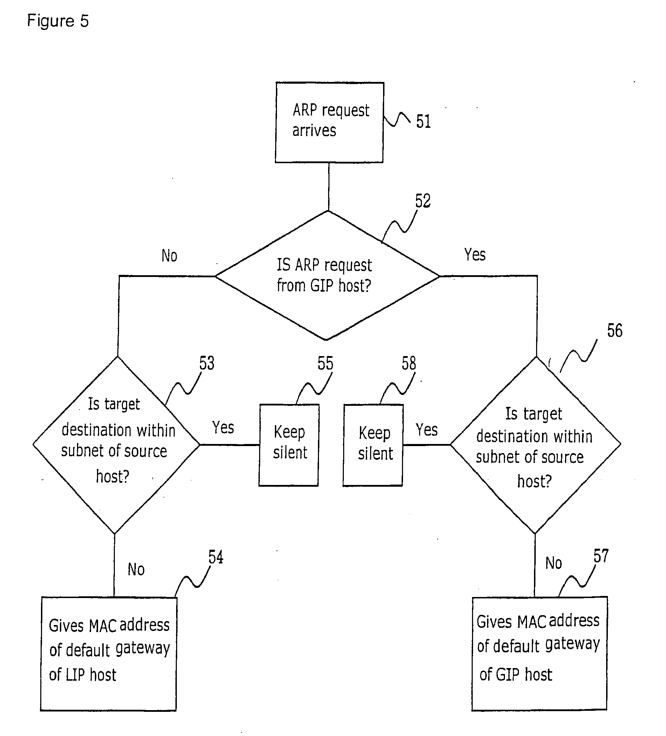

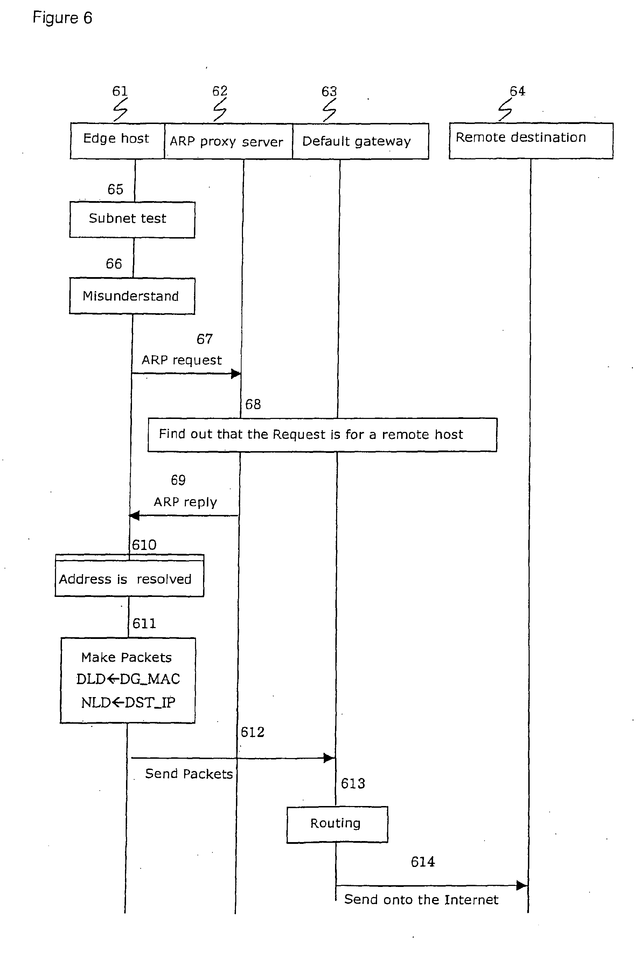

Let us now discuss in detail a flow of the invented ARP proxy server with reference to Fig. 5 and Fig. 6. Fig. 5 is a flow chart showing an operation of a subnet-aware ARP proxy server according to the present invention and Fig. 6 is a sequence chart showing a process of the ARP resolution in case where an edge host broadcasts a Request for a remote destination misunderstood to exist in the same subnet, according to the present invention.

Referring to Fig. 5, an ARP Request from the premises source or IP host arrives **51**. The subnet-aware ARP proxy server makes a decision on whether the ARP Request is from a GIP host or a LIP host **52**. If the ARP Request is form the GIP host, then the subnet-aware ARP proxy server makes a decision on whether the target destination is within the subnet of a source host which produces the ARP Request or a remote host **56**. Here, the subnet-aware ARP proxy server should be aware of the true GIP subnet of the edge network. If the target destination is within the subnet of the source host, the subnet-aware ARP proxy server keeps silent and lets the target destination answer the ARP Request directly **58**. If not, the subnet-aware ARP proxy server gives the source host the MAC address of the default gateway of the GIP host, that is, the MAC address of the edge router **57**.

When the ARP Request is from the LIP host and the target destination is a remote host, the subnet-aware ARP proxy server gives the source host the MAC address of the default gateway of the LIP host, that is, the MAC address of the local interface of the NAT box **54** in case where the LIP address for NAT is aliased on the LAN interface of the edge router which has NAT residing therein. On the other hand, when the target is in the subnet, the subnet-aware ARP proxy server keeps silent **55**. Here, the subnet-aware ARP proxy server should be aware of the true LIP subnet of the edge network and the MAC address of the default gateway thereof.

From the source host's point of view, with regard to the range of target destination's IP address, there are three cases: when the destination address is for a remote host not in the subnet of super mask, when the destination address is for a remote host but included in the subnet of super mask or when the destination address is in the true edge subnet. For the first case, the source host, correctly knowing that destination address is for the remote host, sends packets via the default gateway on its own, and communicates successfully. For those destination hosts which are actually remote hosts but included in the subnet of super mask, the subnet-aware ARP proxy server in accordance with the invention answers the ARP Request from the source host and, as the result, the source host sends packets via the default gateway and communicates successfully. For the last category of destination hosts which are truly in the subnet, the destination hosts themselves answer the ARP Request and communication succeeds. In short, the premises host successfully communicates with all the hosts, even though their subnet mask is abnormally changed, thanks to the subnet-aware ARP proxy server.

With reference to Fig. 6, let us discuss the above-mentioned features of the invented subnet-aware ARP proxy server related to the above--mentioned second case. Fig. 6 is the sequence diagram of address resolution for those remote hosts which is included in the subnet of super mask and in which the source edge host believes the remote host to exist in the same subnet thereof.

Referring to Fig. 6, the edge host **61** tests the target remote destination's IP address against the super mask **65** and misunderstands the destination host to exist in the edge network **66**. As the result, the source host broadcasts ARP Request to find out the MAC address of the destination host **67**. The invented subnet-aware ARP proxy server listens to the broadcast and finds out that the ARP Request is for the remote destination host and that the source host wrongfully believes to be in the edge network **68**. Then the subnet-aware ARP proxy server gives the source host the MAC address of the default gateway of the source host **69.** The source host thinks that the destination host is in the edge and that destination host's MAC address has been resolved **610**. Then the source host makes a packet whose DLD (Data Link Layer Destination) is the default gateway's MAC address and whose NLD (Network Layer Destination) is the remote destination's IP address **611.** The source host sends the packet to the default gateway **612**. The default gateway routes the packet and sends it onto the Internet **613** and **614**. In short, the subnet-aware ARP proxy server is aware of the true subnets in the super-masked multi-subnet edge network and the addresses of the default gateways.

The IP communication device of the present invention comprises the DHCP proxy server which super-masks the multi-subnet premises hosts to the effect that there is no need for intra-edge routing and the subnet-aware ARP proxy server which virtually restores the true subnets of the multi-subnet premises hosts when the multi-subnet premises hosts try to communicate with a remote host misunderstood to exist in the subnet thereof because of the super mask. Though the hosts are configured with a super mask in order to eliminate the need of intra-edge routing, the edge hosts can successfully communicate with any host in the Internet, thanks to the subnet-aware ARP proxy server.

Before we discuss the exemplary embodiments of the invented DHCP proxy server and subnet-aware ARP proxy server, it would be helpful to discuss types of multi-subnets on a single LAN and to discuss some of the implications of an intra-edge routing-less multi-subnet edge network where the GIP hosts and the LIP hosts can fully communicate with each other, without intra-edge routing.

Actually there are two types of multi-subnet edge network on a single LAN segment: a single account edge network and a multiple account edge network.

A single account edge network is, for example, a big office with a leased line and hundreds of FGIP addresses and qualified network administration. For this first type, the benefit of the present invention is mainly the ease of network administration. For example, some devices such as network IP printers that are usually configured with a LIP address often fail to interoperate with GIP hosts via routing. The present invention enables the LIP host and the GIP host to interoperate directly without routing; thus it makes the network administration much easier. The first embodiment of the invention discusses this single account multi-subnet edge network. A multiple account edge network is for example, a Multi Dwelling Unit (MDU) LAN, a Digital Subscriber Line (xDSL) segment, or a Cable Modem Termination System (CMTS) segment. In this environment, there are hundreds of homes and small offices in the edge network. For each home or small office, routers are not available since the router requires FGIP (Fixed Global IP) addresses and there is no qualified network administration. Still, every home and small office wants to have edge-like network independence. The second, third, forth and fifth exemplary embodiments of the invention provide a detailed discussion on the multi-account multi-subnet edge network on a single data link layer segment.

### FIRST EXEMPLARY EMBODIMENT

The simplest embodiment is to deploy in a single account edge network a DHCP proxy server and a subnet-aware ARP proxy server. In the "single account edge network" such as an office-like network environment, all the hosts can be easily identified and/or there is no need to recognize accounts (subscribers). On the other hand, a "multi-account edge network" has multiple subscribers, whose hosts are difficult to fully identify and to authenticate and who want their premises to be treated as an independent network segment, even though one edge router serves all of the accounts.

In this embodiment for the single account multi-subnet edge network, any merging combination of the DHCP proxy server, the subnet-aware ARP proxy server and the edge router in an apparatus is possible; however, for the clarity of discussion and understanding, a diagram showing these network elements as separate equipments shall be used.

The DHCP proxy server in accordance with the first embodiment of the invention has two features. First, the edge network administrator should be able to set the address type (GIP or LIP) and even the address to be assigned for each host. The table, which has this information, is called a PHIMT (Premises Host IP and MAC address Table). Second, the DHCP proxy server gives false, super- subnet mask information when it configures client hosts. The super-subnet mask may be "/1" through "/23" and the preferred super-subnet mask is "/1" of network prefix length. The decimal value of the super-subnet mask is smaller than that of the original subnet mask.

The subnet-aware ARP proxy server in accordance with the first embodiment of the invention listens to the ARP Request broadcast produced from the edge hosts and makes a decision whether the destination IP address in the Request belongs to the edge subnets or not. If not, the subnet-aware ARP proxy server gives the MAC address of local interface of the host's default gateway. So the subnet-aware ARP proxy server needs to be aware of the true subnets of the edge network, the GIP subnet and the LIP subnet. And also the subnet-aware ARP proxy server needs to be aware of the default gateway's MAC address for each subnet. That is why this subnet-aware ARP proxy server is coined "subnet-aware" ARP proxy.

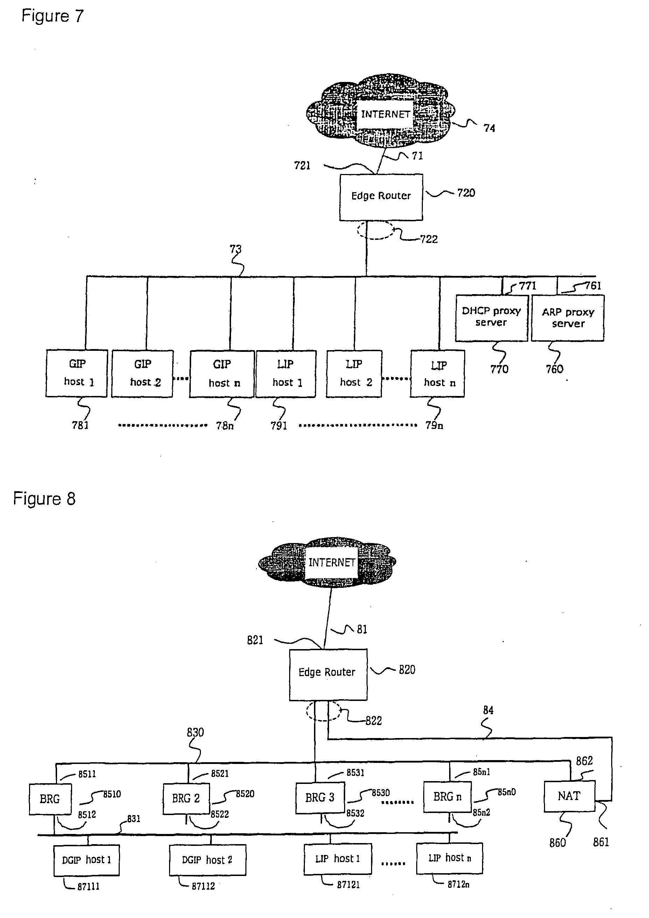

Fig. 7 is a block diagram showing a single account multi-subnet edge network on a single LAN segment according to a first embodiment of the present invention where the invented DHCP proxy server and the invented subnet-aware ARP proxy are deployed. Actually the single account multi-subnet edge network on a single LAN segment can be a large office with a lease line, using FGIP addresses. For example, this edge's GIP subnet is 210.1.1.0 /25 and the LIP subnet is 192.168.1.0 /24.

Referring to Fig. 7, there is a lease line **71** and an edge router **720** connected to the lease line **71**. The edge router **720** has two network interfaces: the Wide Area Network (WAN) interface **721** and the local interface **722**. The WAN interface **721** is configured with 210.1.0.10 /21. The local interface **722** is configured with a GIP address of 210.1.1.1 /25 and has an LIP address alias of 192.168.1.1 /24, since the edge router **720** has NAT residing in it in order to connect the LIP hosts to the Internet.

On LAN segment **73**, there are premises GIP hosts **781∼78n** and LIP hosts **791∼79n** and the invented DHCP proxy server **770** and the subnet-aware ARP proxy server **760**. The DHCP proxy server **770** in accordance with the present invention configures the GIP hosts **781∼78n** and the LIP hosts **791~79n.** The network interface **771** of the DHCP proxy server **770** is correctly configured with LIP addresses such as 192.168.1.2 /1 of the network prefix length. A network administrator can set the address type (GIP or LIP) and address which should be assigned to the GIP hosts **781∼78n** and the LIP hosts **791~79n** by the DHCP proxy server **770**. The setting by the administrator can be defined as "PHIMT setting". When assigning an IP address to a premises host, the DHCP proxy server **770** gives a super mask, which is "/1" of the network prefix length in the preferred embodiment. It is noteworthy that some operating systems (OS) do not allow keying-in such a big subnet, however, they can be configured with "/1" subnet mask using DHCP.

And for the default gateway, the DHCP proxy server **770** gives the IP address of local interface of the edge router **720** to the GIP client hosts and gives the IP address of the NAT to the LIP client hosts. In this case, since NAT resides in the edge router **720** and the local network interface has a local IP address alias, the MAC addresses of local interface of the edge router **720** and MAC address of the NAT are the same..

The network interface of the subnet-aware ARP proxy server **760** is configured with a local IP addresses 192.168.1.3 of subnet mask /1.

In this embodiment, when a host is booted, the DHCP proxy server **770** gives one of the hosts **781∼78n** and **791**∼**79n** on the LAN segment **73** a GIP address or a LIP address according to the assignment policy defined by the network administrator. Whichever address it assigns, the subnet is super-masked as, for example, "/1" of the network prefix length. With this enlarged subnet mask (super mask), the GIP hosts **781 ∼78n** and the LIP hosts **791 ∼79n** communicate directly with each other on the LAN segment **73**, without any intra-edge routing by the edge router **720**.

When a source host has a remote target destination in the subnet range of the super mask, for example, IP address of the target destination being 148.210.34.9, the source host broadcasts ARP Request messages. That is because the source host wrongfully believes this remote destination to exist in the subnet thereof. The subnet-aware ARP proxy server **760** listens to this broadcast, and thereafter gives the MAC address of the default gateway of the source host to both the GIP host and the LIP host, wherein MAC address of the default gateway of the source host is the MAC address of the local interface **722** of the edge router **720**, since the local interface **722** has the GIP address and the LIP address configured on it.

Once the source host acquires the MAC address, the source host believes that the MAC address acquired is the destination's MAC address and make a packet whose DLD (Data Link layer Destination) address is the MAC address of the default gateway and NLD (Network Layer Destination) is the destination's IP address. Then the source host sends this packet to the local interface of the default gateway. When the packet is from the GIP host, it is routed onto the Internet and when it is from the LIP host, it is NATed on to the Internet. From the router's point of view, this packet is totally legitimate and routable or network-address-translatable. Thus the IP communication succeeds.

As is shown above, the DHCP proxy server of the present invention enables the GIP hosts and the LIP host of a multi-subnet edge network on a single LAN segment to communicate with each other without intra-edge routing; and the subnet-aware ARP proxy server of the present invention virtually restores the true subnets of the edge hosts to the effect that the edge hosts can perfectly communicate with remote IP hosts even though the edge hosts are configured with a falsified and abnormal super mask.

### SECOND EXEMPLARY EMBODIMENT

Typically many homes and small offices belong to one edge network. For example, an edge router of ISP (Internet Service Provider) serves hundreds of accounts in a MDU (Multi Dwelling Unit) LAN or in a xDSL (Digital Subscriber Line) segment or in a CMTS (Cable Modem Termination System) segment. Though one edge router serves hundreds of accounts all, each of these accounts needs to have their premises network work like an edge network so that an account can freely change their hosts without getting authentication by the ISP, add in-house-only IP connectivity for a network printer for free and have their premises protected for a privacy.

The second embodiment shows a BRG (Bridge Residential Gateway) with the invented DHCP proxy server and the invented subnet-aware ARP proxy server residing therein. A residential gateway is an apparatus, which connects the premises LAN network to the edge network.

Fig. 8 shows the second embodiment applied to the MDU LAN. Referring to Fig. 8, an edge router **820** is connected to a leased line **81** and a NAT box **860** is connected to the edge router **820**. There are n accounts. Each of n accounts has the invented BRG **8510 ~85n0** connecting the premises LAN segment **831 ∼83n** to the edge LAN segment **830**. On the premises LAN segment connected to the BRG1 **8510**, there are two DGIP hosts **87111** and **87112** and n LIP hosts **87121**∼**8712n** according to the SLA (Service Level Agreement) between the account and the ISP.

The GIP subnet of the edge LAN segment **830** is, for example, 210.1.0.0 /23 and the LIP subnet thereof is, for example, 172.30.0.0 /20. The local interface **822** of the edge router **820** is 210.1.0.1 /23. This address is the default gateway address for the GIP hosts in the edge network. Preferably, the edge router **820** does not need to be aware of the existence of the LIP hosts in the edge network, since the basic philosophy of the invention is to provide compatibility with existing network equipments and with existing network configuration.

The edge router **820** has a DHCP relay module that relays DHCP Discover and Request broadcasts to a remote DHCP server operated by the ISP. It is becoming more and more common for an ISP to have the DHCP server for adjacent multiple edges, consolidated in one server system and located remotely, for the ease and efficiency of management. A detailed discussion will be provided later on DHCP server.

The NAT box **860** has two network interfaces; an LIP interface **862** configured with 172.30.0.1 /20 which is the default gateway address for the LIP hosts in the edge network and a GIP interface **861** configured with 210.1.0.2 /23 which is connected through LAN segment **84** to the edge router **820**.

The BRGs **8510~85n0** in accordance with the present invention function as the DHCP proxy server for the premises DGIP hosts and the premises LIP hosts. The ISP can allocate a LIP pool, for example, 50 LIP addresses, for each premises segment; the LIP pool should be unique in the edge. Thus, when the LIP hosts are booted and the BRGs **8510~85n0** recognize that the hosts are set for an LIP configuration, then the DHCP proxy server residing in the BRGs **8510~85n0** can assign to the LIP hosts a LIP address out of the allocated LIP pool.

However, for the DGIP hosts, an ordinary DHCP server residing in the BRGs **8510~85n0** would not suffice. That is because, for the DGIP hosts, the BRGs **8510~85n0** should be able to "fetch" a DGIP addresses from the original DHCP server at the event of the host's booting and to pass the fetched address to the host. With regard to the IP configuration of the DGIP host, the invented DHCP proxy server residing in the BRGs **8510~85n0** functions as a server to the client host, and functions as a DHCP client helper to the original DHCP server. The DHCP proxy server of the present invention helps the premises DGIP host to communicate with the original DHCP server in a network environment where the BRG translates the data link layer addresses, which will be discussed later. And the DHCP proxy server intercepts and changes some critical information in the Ack message delivered from the original DHCP server. The DHCP proxy server changes the subnet mask, the DHCP server ID, the lease time and other information and configures the DGIP client host with this changed information.

When the DGIP host is booted, the DHCP proxy server in the BRGs **8510~85n0** forwards the Discover and Request message to the edge LAN segment **830**. The DHCP proxy server intercepts and changes the DHCP configuration information provided from the original DHCP server. This process will be discussed in detail in Figs. 9 through 12.

Noteworthy is the fact that a program module for special auxiliary DHCP relay which is invented is installed in the NAT box **860**. Typically an edge router has a DHCP relay. However, a typical relay in an edge router uses the client MAC address included in the DHCP message (DHCP.chaddr) as the downstream DHCP packet destination address, while the invented BRG performs DLAT (Data Link layer Addresses Translation) and all downstream packets to the premises should use the MAC address of the BRG as the destination. Thus, in this DLAT environment, a downstream packet with the client host's MAC address as its destination address is not allowed to pass the BRGs **8510~85n0.** The DLAT (Data Link layer Address Translation) feature of the BRGs **8510~85n0** is an optional feature of the present invention, and in that sense, it does not constitute the vital element, not like the DHCP proxy server or the subnet-aware ARP proxy server. However, it is very valuable when there are thousands of premises hosts in a multi-account multi-subnet edge.

The auxiliary DHCP relay module of the present invention residing in the NAT box **860** has two benefits compared with traditional relays. First, when NAT box **860** with auxiliary DHCP relay module forwards the DHCP message received from the original DHCP server to the BRGs, the NAT box **860** broadcasts the message to the edge LAN segment **830** or it uses MAC address of the BRGs **8511, 8521,..** and **85n1** as MAC address of the packet destination. Thus the BRGs **8510**, **8520,**.. and **85n0** can receive the packet in spite of DLAT. Second, the invented auxiliary DHCP relay module receives a DHCP message at the local interface **862** of the NAT **860** and sends the DHCP message via the WAN interface **861** of the NAT **860** and vice versa. Thus the BRGs **8510, 8520,..** and **85n0** which are configured with the LIP addresses, can successfully communicate with the original DHCP server, via the auxiliary DHCP relay in the NAT box **860**.

When the DHCP proxy server of the BRGs **8510, 8520,..** and **85n0** receives the DGIP configuration information from the remote DHCP server, the DHCP proxy server changes the subnet mask to the super mask such as "/1" of the network prefix length, original DHCP server ID to that of the DHCP proxy server and lease time and thereafter configures the premises hosts using the changed DGIP configuration information.

In short, with the help of the invented auxiliary DHCP relay module, the invented DHCP proxy server in BRGs **8510**, **8520**,.. and **85n0**, which is configured with a LIP and which is consistent with its task of DLAT, can successfully communicate with the original DHCP server and thus can intercept and change the critical DHCP information such as the subnet mask, the DHCP server ID and, optionally, the lease time.

Now, it will be very helpful to cover what are the DHCP messages and how they are handled by the DHCP proxy server in the BRGs **8510**, **8520**,.. and **85n0** according to the present invention.

Fig. 9 is a table showing DHCP messages generated from the GIP hosts and their handling by the invented DHCP proxy server residing in the BRG shown in Fig. 8, and Fig. 10 is a table showing DHCP messages generated from the LIP hosts and their handling by the invented DHCP proxy server residing in a BRG shown in Fig. 8. It is noteworthy here that the BRGs **8510**, **8520,**.. and **85n0** are bridges and each of them has one LIP address for its own and two data link layer interfaces: the edge interfaces **8511 ~85n1** which are connected to the edge LAN segment **830** and the premises interfaces **8512~85n2** which are connected to the premises LAN segments **831 ∼83n**. The term "send out" means that the BRGs 8510, **8520,**.. and **85n0** send packets to the edge LAN segment 830 via the edge interface **8511~85n1.** The term "send in" means that BRGs **8510, 8520,..** and **85n0** send packets to the premises LAN segment **831 ~83n** via the premises interface **8512~85n2.**

In DHCP there are 5 types of messages sent by the client and 3 types sent by the sever. Discover is a broadcast message sent by the client; the meaning is "who is my DHCP server? Please configure me!" Then the DHCP server makes an Offer message: "You may use this IP address." Upon receiving the Offer, the client broadcasts once more, not using the offered address yet: "I would like to use the offered IP address w.x.y.z!" This second broadcast is called a Request. Then the server which had offered the IP address that the client showed interest in, finalizes: "You shall use the offered address." This finalization message is called an Ack. Now that the client has the address, finding that it needs some more information such as Domain Name Service (DNS) sever address, the client unicasts a message to the server for more information. This unicast message is called "Inform". Also the client can broadcast a Decline message after finding out that another host in the segment is using the same address. When the client is turned off, it sends a Release message to the sever in order to release the leased address. And when the client wants to extend the lease time, it unicasts a renewal Request message to the server. When this lease renewal Request is accepted by the server, the server sends an Ack. When the lease renewal Request is not acceptable for the server, then the server sends a Nak message to the client.

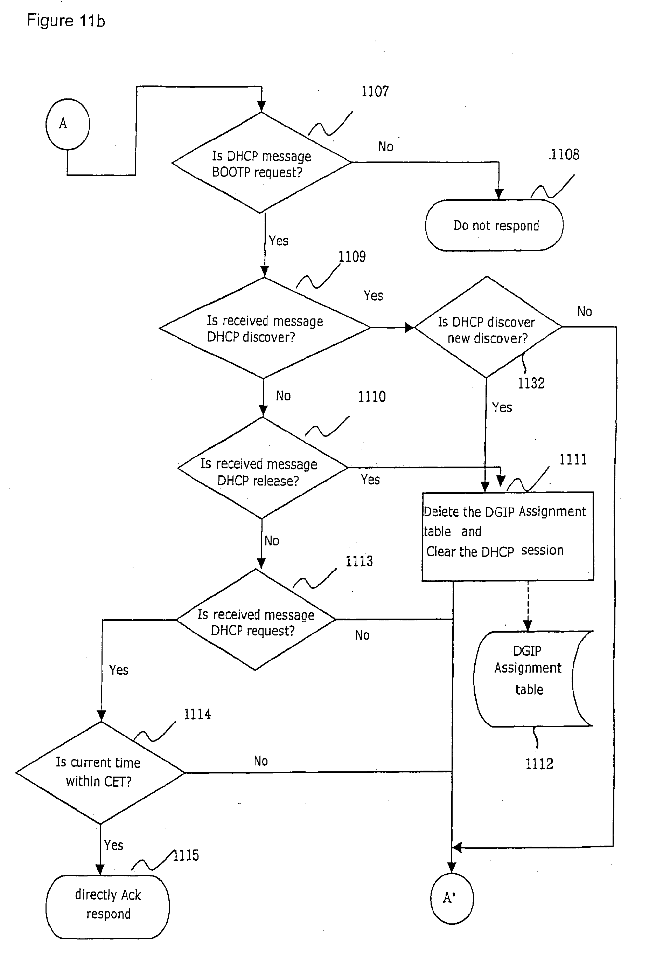

Fig. 11a through Fig. 11d are detailed flow charts showing the DHCP message handling of the invented DHCP proxy server residing in the BRG of Fig. 8. Referring to Fig. 11a- Fig.11d, when the DHCP message arrives at the BRG **1101**, the BRG finds out whether the DHCP message arrives from the premises LAN segment or from the edge LAN segment **1102**. Here, whether the arrived message is the DHCP message can be decided by checking a magic number in the option filed of the BOOTP message (UDP 67 and 68 ports). If the DHCP message arrives from the premises LAN segment, the BRG makes a decision on whether the MAC address, which is included in the DHCP message and called "DHCP.chaddr" is listed in the PHIMT (Premises Host IP and MAC Table) of the BRG **1103**.

There can be various ways to implement how to administrate the PHIMT. The PHIMT is a list which uses the MAC address of a premises host as the key value and specifies the type of IP address and IP address value to be assigned to the premises host and, preferably, the type of connectivity service categories matched to the premises host. The type of service categories are as defined by the ISP. The BRG is an intelligent bridge and it can perform Data Link layer address filtering, which means, even within LIP connectivity only, the ISP can define multiple service categories and set rules for each service categories.

One exemplary service category is to define in-house-only LIP configuration as the default IP configuration, which means that unless specified otherwise, the BRG configures the host with a LIP but the host can only communicate within the premises segment; the BRG does not allow any packets from the in-house-only LIP host to pass through to the edge LAN segment. The merit of this exemplary PHIMT policy is that it enables users to freely connect their IP hosts to the premises LAN segment, in order to build a home network, while preventing beyond-the-premises Internet connectivity unless it is allowed by the SLA. In any event, the invented DHCP proxy server of the BRG makes a decision on whether the MAC address (DHCP.chaddr) in payload is listed in the PHIMT table.

If the MAC address (DHCP.chaddr) in payload is not included in the PHIMT table, the BRG does not respond **1104**. If the MAC address is included, the DHCP proxy server of the present invention makes a decision on whether the host with the address (DHCP.chaddr) is set to use the LIP address **1105**. If the host is set for the LIP configuration, then the BRG responds or does not respond according to the logic specified in Fig. 10 **1106.** If the host is set for the DGIP, then the BRG makes a decision on whether the DHCP message is the BOOTP Request 1107. The BOOTP Request includes all DHCP messages of the DHCP discover, request and release. When the received message is not a BOOTP Request, the BRG does not respond **1108**. If the received message is the BOOTP Request, then the DHCP proxy server in the BRG decides whether the received message is a DHCP Discover **1109**. If the received message is the DHCP Discover, the invented DHCP proxy server decides whether the DHCP Discover is a new Discover or a consecutive Discover **1132**. If the DHCP Discover is a consecutive Discover, further processing is chained to A'. If the DHCP Discover is a new Discover, the invented DHCP proxy server deletes the DGIP assignment table **1112** for the source host and clears the DHCP session thereof **1111**. The DGIP assignment table **1112** is a list table in the BRG and contains all the DGIP assignment information. And thereafter further processing is chained to A'. If the received message is not a Discover, the DHCP proxy server of the present invention finds out whether the received message is a DHCP Release **1110**. If the received message is a Release, then the invented DHCP proxy server deletes the DGIP assignment table **1111, 1112** and further processing is chained to A'. If the received message is not the Release, the invented DHCP proxy server finds out whether the received message is a DHCP Request **1113**. If the received message is not the DHCP Request, further processing is chained to A'. If the received message is a DHCP Request, the DHCP proxy server finds out whether the current time is within the CET (Caching Expiration Time) **1114.** If the current time is within the CET, the DHCP proxy server gives Ack message to the source host sending the Request, on its own **1115**. If the current time is not within the CET, the processing is chained to A'. The meaning "not within the CET" includes the case where there is no CET, that is the received message being a request for initial assignment of the IP address.

The CET is a term coined in this invention. The CET is very closely related with the OLT (Original Lease Time) and the PLT (Premises Lease Time). If we suppose the OLT adopted by the original DHCP server to be 3,600 seconds, the DHCP proxy server of the present invention can change the lease time, for example to 60 seconds, which is called the PLT in the invention, when configuring the premises host. The PLT, which is much shorter than the OLT, has two following merits. First, the user does not need to key-in all the configuration information to the host when he/she changes the IP address type and/or the IP connectivity service type matched for the host. Since the PLT is so short, the user only needs to change the PHIMT setting and waits for a few seconds and the DHCP proxy server gives a new IP configuration to the host in accordance with the changed PHIMT information. Second, when the DGIP host is abruptly shut down, the DHCP proxy releases the IP address to the original DHCP server in a few seconds.

With its lease time configured with the PLT, for example, 60 seconds, the client host sets T1 as 30 seconds and T2 as 52.5 seconds. T1 and T2 are defined by the DHCP standard with regard to the lease time (L); T1 is typically 0.5 of the lease time and T2 is 0.875 of the lease time. Within T1, the client can confidently uses the leased IP address. Between T1 and T2, the client tries to renew the lease. Once renewed, a new set of Lease Time, T1, and T2 is applied. Beyond T2, the client is recommended not to use the IP address anymore.

Since the PLT is the lease time applied to the host, the host sends an lease renewal Request message in every 30 seconds, when the PLT is set as 60 seconds. If the BRG of the present invention had forwarded the renewal Request every time, the original DHCP sever would have been burdened with numerous Request messages from all the DGIP hosts. The CET solves this problem. The CET is the time before which the invented DHCP proxy server gives a renewal Ack on its own and beyond which the invented DHCP proxy server no longer gets involved in the direct Request communication between the original DHCP server and the premises host. The CET is preferably about half of the OLT and before the CET, the DHCP proxy server gives Ack to the Request to extend the lease. Past the CET, the DHCP proxy server lets the premises DGIP host directly communicate with the original DHCP server.

With this scheme, we can avoid a situation where the premises DGIP host with its very short PLT, sends Request message too frequently to the original DHCP server; still we can have the merits by having a very short PLT.

Now back to the flow of the DHCP proxy server, A' starts with finding out whether the DHCP proxy server of the BRG is set for a broadcast mode or a unicast mode **1116**. In the broadcast mode, the DHCP proxy server is not provided with the original DHCP server or relay information. In the unicast mode, the DHCP proxy server is provided with the original DHCP server information. The broadcast mode is much simpler in terms of setting and is preferable. However, when there are multiple ISP's providing connectivity services on a single MDU LAN, the unicast mode is an efficient and effective way to select the ISP which provides connectivity services to the premises hosts. In the broadcast mode, the invented DHCP proxy server uses MAC broadcast address (0xffffffffffff) for the packet's data link layer destination and IP broadcast address for the packet's network layer destination **1118**. Here it is noteworthy that the invented DHCP proxy server can be set to use which IP broadcast address to use: the broadcast address of the true subnet or the broadcast address of the super-masked subnet.

In the unicast mode, the invented DHCP proxy server finds out whether the IP address of the original DHCP server is acquired **1117.** If not, then the packet is processed as the broadcast **1118.** If there is the IP address of the original DHCP server, then the DHCP proxy server uses the address of the original DHCP server for the packet's destination address **1119.**

After making the destination part of the packet, the DHCP proxy server makes the source part. Being consistent with the DLAT feature of the BRG, the DHCP proxy server uses the MAC address of the BRG for the source MAC address **1120**. Then, the BRG sends out the packet via the edge LAN interface **1121**.

On the other hand, with regard to the step **1102**, if the DHCP message has come into the edge interface of the BRG, the invented DHCP proxy server finds out whether the DHCP.chaddr is in the PHIMT **1122.** If the DHCP.chaddr is not in the list of PHIMT, the DHCP proxy server does not respond **1104**. If the DHCP.chaddr is in the list of PHIMT, then the DHCP proxy server finds out whether the DHCP message is a BOOTP Reply **1123**. If the DHCP message is not a BOOTP Reply, the DHCP proxy server does not respond **1124**. If it is, then the DHCP proxy server finds out whether the DHCP message is a DHCP Ack **1125**. If the DHCP message is not the DHCP Ack, then it must be either an Offer or a Nak. The DHCP proxy server changes the server ID field into the IP address of BRG **1129**, source MAC address into the MAC address of the BRG and source IP address into the IP address of the BRG **1130.** Then the DHCP proxy server "sends in" the packet to the premises LAN segment via the premises LAN interface **1131**.

If the message is the DHCP Ack, the DHCP proxy server adds the DHCP data to the DGIP assignment table **1126**, sets the CET field of the DGIP assignment table **1127**. Then the DHCP proxy server changes the subnet mask into the super mask and changes the OLT into PLT **1128,** modifies the Server ID field into the IP address of the BRG **1129,** and changes source MAC address into the MAC address of the BRG and source IP address into the IP address of the BRG **1130**. The DHCP proxy server "sends in" the packet to the premises LAN segment via the premises LAN interface **1131**.

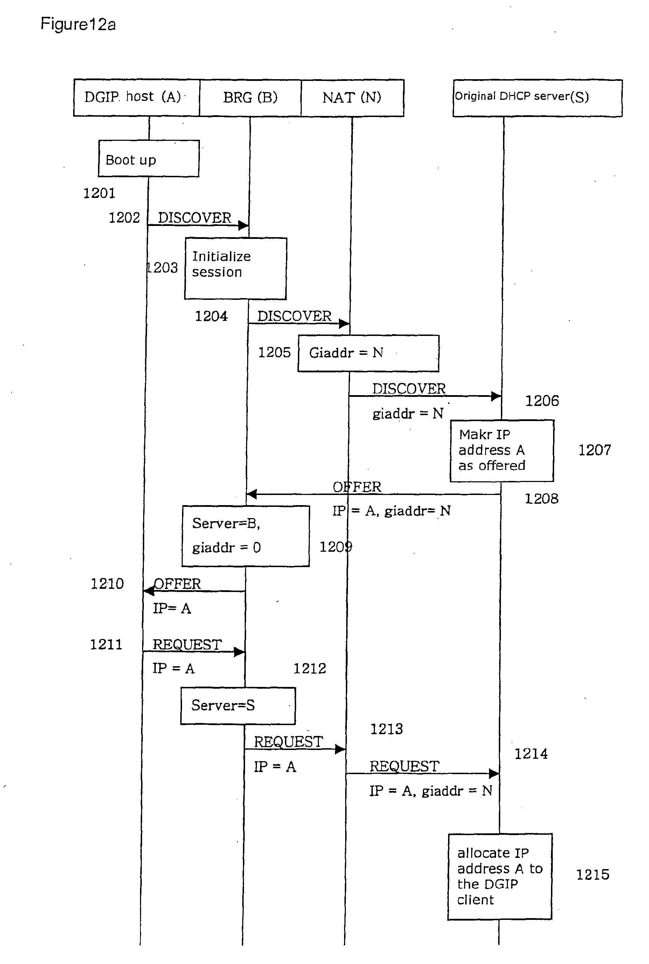

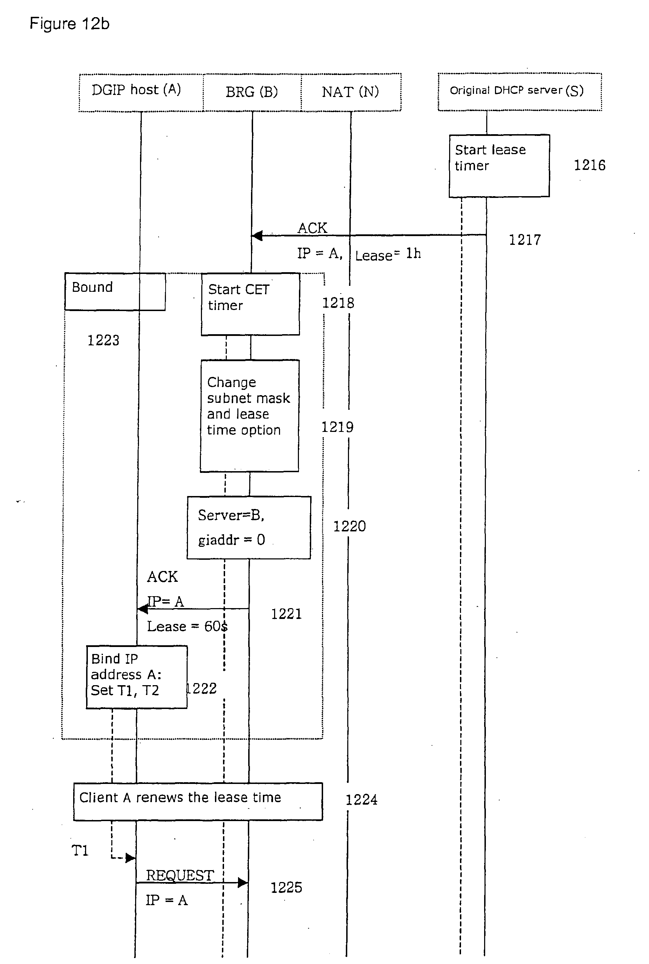

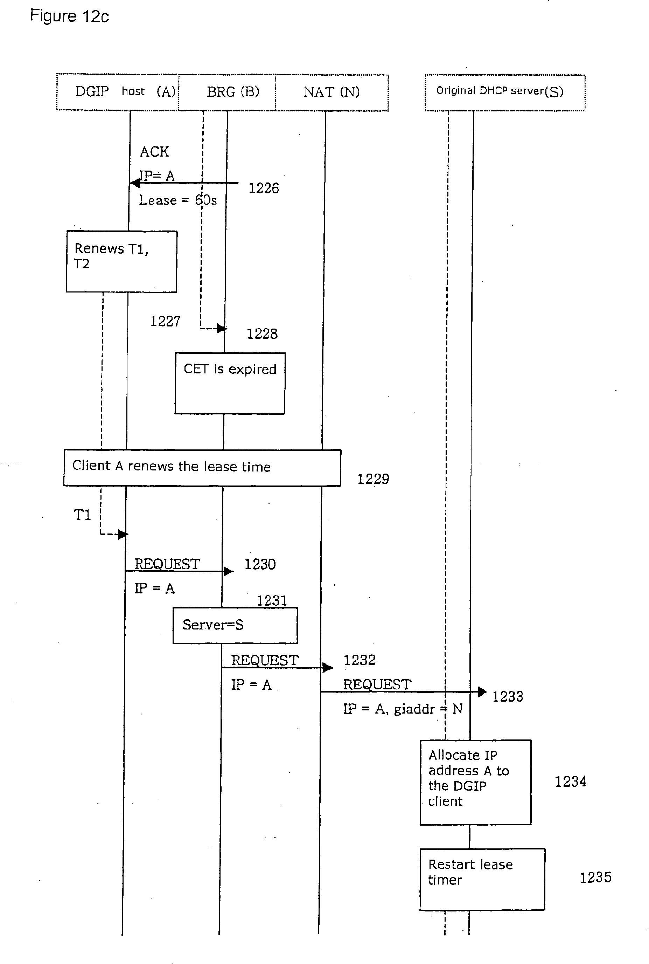

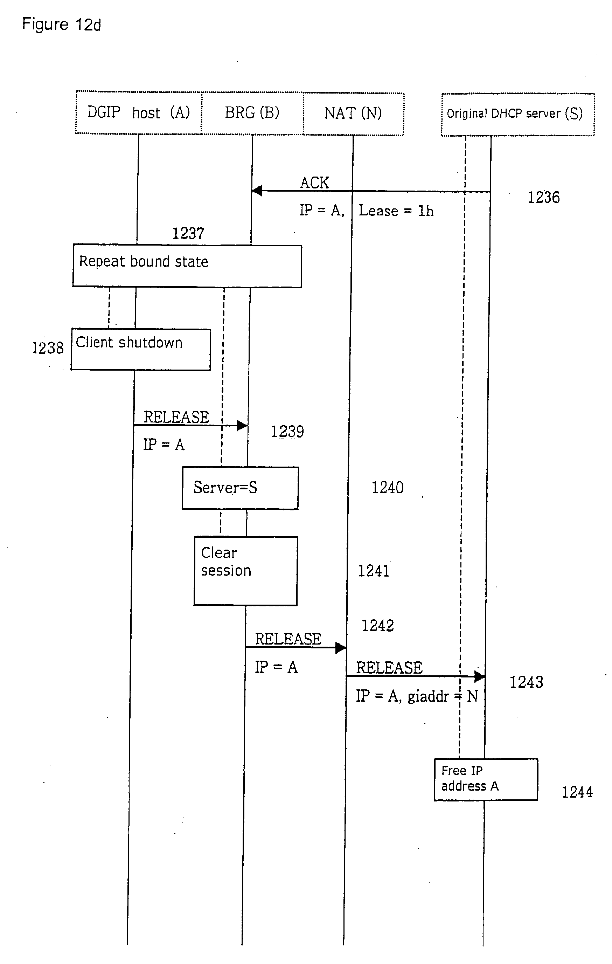

Figs. 12a through 12d are sequence diagrams showing a process of IP configuration through a process of IP address release, for a DGIP host. Here the NAT box, as is shown in Fig. 8, serves the LIP hosts belonging to multiple premises in the edge network and has the invented auxiliary DHCP relay module residing in it. And the original DHCP server in Fig. 12a-12d exists remotely.

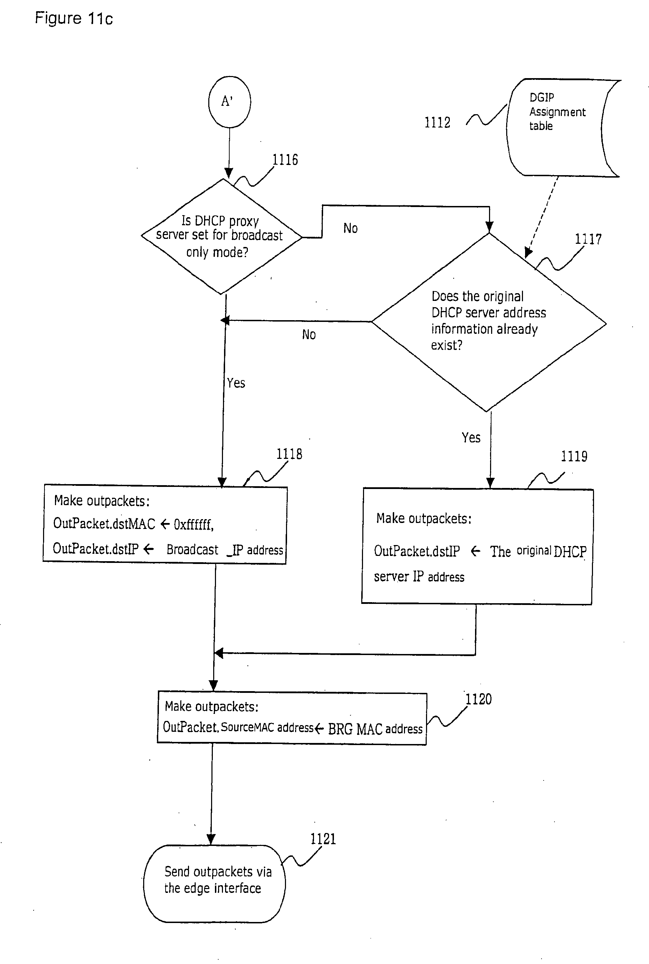

The DGIP host is booted **1201**. The host broadcasts Discover messages **1202**. When the BRG B receives the request broadcast, a DHCP session is initialized **1203**. The BRG sends out the Discover message that is processed as specified in step **1116** through step **1120** of Fig. 11c to the NAT box N **1204**. The invented auxiliary DHCP relay module residing in the NAT box 860 receives the broadcast message via the LIP interface **862**. The invented auxiliary DHCP relay module sets the GIP address of the NAT box **860** as the relay address field, "Giaddr" **1205**. And the invented auxiliary DHCP relay module unicasts the Discover to the original DHCP server **1206**. The original DHCP server marks an IP address A as "offered" **1207.** Then the original DHCP server sends the Offer to the GIP interface **861** of the NAT box **860** and the auxiliary DHCP relay module sends this message via the LIP interface **862** to the BRG **1208**.

The invented auxiliary DHCP relay module is different from a general DHCP relay module in two aspects. First, the invented auxiliary DHCP relay module receives a DHCP packet from the LIP interface and sends it via the GIP interface and vice versa. That is, the auxiliary DHCP relay module of the present invention operates on the NAT while a general DHCP relay module operates only on GIP interfaces. Second, when forwarding packets form the original DHCP server to the edge LAN segment, the invented auxiliary DHCP relay uses either the broadcast address or the address of the BRG for the packet's destination, while the general DHCP relay uses the DHCP.chaddr for the packet's destination.

Now back to the sequence diagram of Fig. 12a through Fig. 12d, upon receiving the Offer, the BRG changes the Giaddr field into "0" **1209**, which means that there is no relay involved, and sends the changed Offer to the client host **1210**.

Upon receiving the Offer, the client host once again broadcasts a Request **1211.** When the IP address of the original server is mentioned in the Request, the BRG changes the Server ID field into the IP address of the original server **1212**. And the BRG broadcasts the Request onto the edge LAN segment **1213**. The auxiliary DHCP relay module of the present invention relays the Request to the original DHCP server **1214**. The original DHCP server allocates the offered IP address finally to the host **1215**. The original DHCP server starts the lease timer for OLT **1216**. The original DHCP server gives Ack message to the client **1217**.

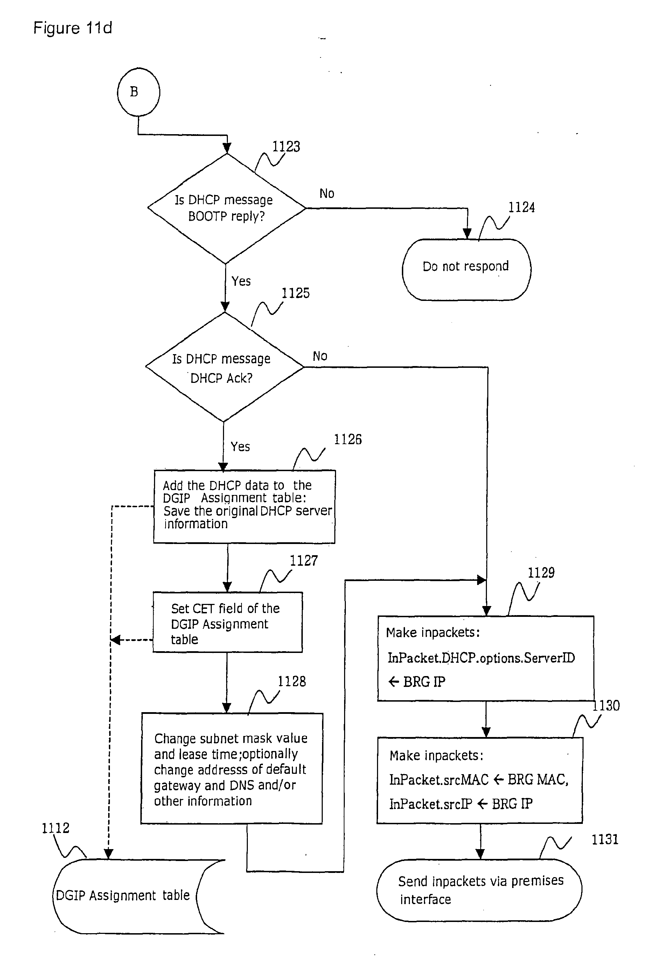

From the original DHCP server's point of view, now the IP address resource is in a "bound" status **1223**. The invented DHCP proxy server in the BRG, as is shown in steps **1126,1127,1128,1129 and 1130** in Fig. 11d, starts the CET timer **1218**, changes the subnet mask, changes the OLT into the PLT **1219**, changes the DHCP server ID into the IP address of the BRG and blurs out the existence of relay **1220**. Then the DHCP proxy server "sends in" the Ack packet to the premises client host **1221**.

Here, for exemplary purpose, let us suppose the OLT as 3,600 seconds, the PLT as 60 seconds and the CET as 1,800 seconds, the half of the OLT. From the client's point of view, now the IP address is bound, and the client host sets T1 and T2 in accordance with the PLT value **1222.** The client host sets T1 as 30 seconds, since the DHCP standard recommends half of the lease time (PLT) to be T1, after which the client host sends a lease renewal Request.

Now the client host wants to renew the lease. The client host sends Request message to its DHCP server, that is, not to the original DHCP server but to the BRG **1225**. When the current time is still before the CET limit at **1224** and **1225**, the invented DHCP proxy server in the BRG gives the message of Ack on its own **1226**. From the instance of renewal Ack, the client host has a new 60-second lease **1227.** The client host renews the premises lease again and again and, at a certain point, in the preferred embodiment, when the time for the lease process is past the half of OLT, the CET expires **1228**.

When the client host sends a renewal Request after the CET, the client host tries to renew the lease and sends a unicast Request to its BRG **1229, 1230**. Since the current time is past the CET, the invented DHCP proxy server in the BRG changes the DHCP server address into that of the original DHCP server **1231** and sends this unicast Request to the auxiliary DHCP relay module in the NAT box **1232**. The auxiliary DHCP relay module relays the Request to the original DHCP server, putting the GIP address of the NAT box in the relay field **1233.** The original DHCP server renews the IP address allocated to the client host **1234** and restarts the lease timer **1235**. Then the original DHCP server sends the Ack to the BRG via the NAT box **1236**. Now the original lease is renewed and the invented DHCP proxy server applies the renewed OLT and CET **1237**.

When the client host is shut down **1238**, the client host sends a Release message to the BRG with the address of the BRG as the Server ID field value **1239**. The invented DHCP proxy server residing in the BRG changes the Server ID address from its own to that of the original DHCP server **1240,** and clears the DHCP session **1241** and sends the packet to the auxiliary DHCP relay module in the NAT box **1242**. The invented auxiliary DHCP relay module fills up the relay field in the packet and relays it to the original DHCP server **1243**. Upon receiving the Release message, the original DHCP server frees the IP address from the bound status **1244**.

### THIRD EXEMPLARY EMBODIMENT

In the BRG, there is the same kind of the invented subnet-aware ARP proxy server and the DHCP proxy server as has been discussed in the first embodiment. There are also some more important features implemented in the BRG.

First, the BRG can perform the DLAT (Data Link Layer Address Translation). The BRG changes the MAC address of the outbound packets from the MAC address of the premises host to the MAC address of the BRG and vice versa. Thus the edge LAN segment is protected from an ARP storm, even though the number of premises hosts increases dramatically in a LAN segment.

Second, the BRG can perform filtering in data link layer. This enables the ISP to define and manage multiple categories of the LIP connectivity services.

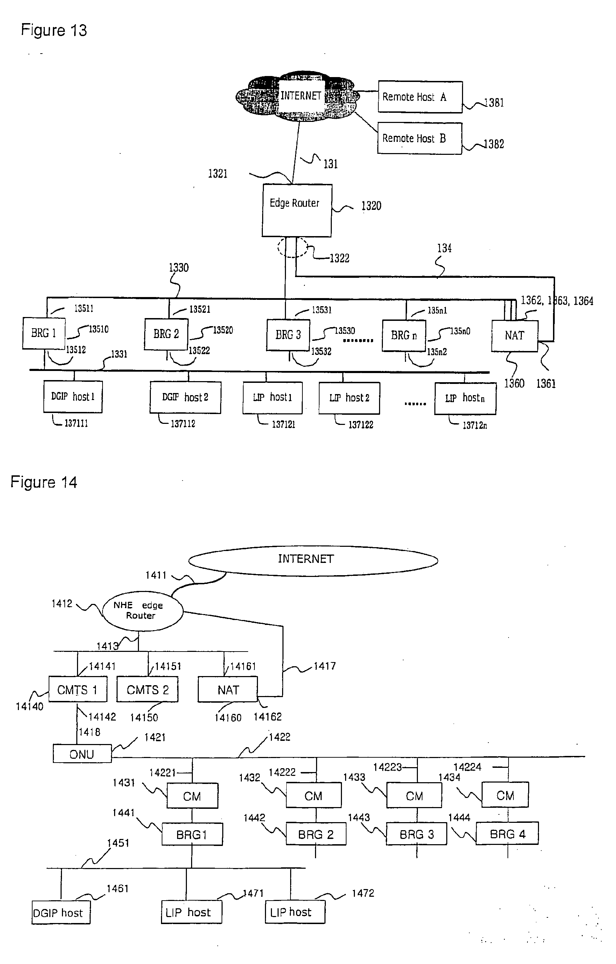

Fig. 13 shows the packet path management based on the data link layer packet filtering of the BRG and shows an exemplary method of providing multiple categories of the LIP connectivity services. For purpose of discussion, for example, the ISP of the edge network has defined 4 categories of the LIP connectivity services. A category of "In-house-only" is for those LIP hosts which are not connected to the Internet but which can communicate freely with other hosts in the premises LAN segment. A category of "Power" is for the power meter and can only communicate with the power company's remote server **1381**. A category of "Home-control" is for an IP appliance which can be controlled either from within the premises LAN segment or via the home control site **1382**, where a host configured with "home-control" can only communicate with the remote home control site server or within the home. A category of "NATed Internet" is for the PC which can communicate with any host in the Internet via the NAT box **1360**.

The NAT box has three local interfaces **1362,1363 and1364** and each local interface has its own MAC address and LIP address. The interface **1362** is for the gateway to the power company's host **1381**. The interface **1363** is for the gateway to the home-control site **1382**. The interface **1364** is for the gateway for NATed Internet service. And the NAT box has the network layer filter which tests the source-destination eligibility.

The premises host **137121** is a power meter and the premises host **137122** is an IP appliance and the premises **13712n** is a PC which is set to use the NATed Internet service.

The invented BRG performs data link layer filtering. For example, when the PC **13712n**, which is set to use the gateway **1364**, tries to use the gateways **1362** or **1363**, the BRG blocks the packet from the PC **1312n**. On the other hand, if a PC tries to connect to a general Internet remote site, using the MAC address and IP address of the power meter **13721** and using the power meter's gateway **1362**, the BRG fails to block the packet but the network layer filtering of the NAT box blocks the packet.

In short, the data link layer filtering by the invented BRG, together with the network layer filtering by the NAT box, provides a very secure and efficient and manageable way of providing various service categories. Thus the ISP can now define the multiple categories of LIP connectivity services and provide them at affordable prices, since there is little chance of cheating.

### FOURTH EXEMPLARY EMBODIMENT

The second embodiment of the present invention can be applied to a xDSL segment and a CMTS segment as well as a MDU LAN segment.

Fig. 14 shows the application of the second embodiment, applied to the CMTS segment. The office where the edge router and other communication equipments are operated for a Cable-based Internet is called Network Head End (NHE). In the NHE, there are an edge router **1412**, an LAN segment **1413** and a plurality of CMTS **14140** and **14150** and a NAT box **14160.** A fiber connects the CMTS's **14140** and **14150** to an ONU (Optical Network Unit) **1421**, which exists usually on a street. From the ONU, there is a coax cable **1422** running along the street. Branched coax cables **14221, 14222, 14223** and **14224** are connecting the premises to the coax cable **1422**. In the NHE, there is also a combiner which combines data signals and cable broadcast signals; actually coax cables connect the CMTS **14140** or **14150** to a combiner and a fiber connects the ONU **1421** to the combiner. However combiners are omitted in Fig. 14 for readability.

In the premises, branched coax cable from the street is connected to the CM (Cable Modem) **1431,1432** and **1434**. The CMs **1431,1432** and **1434** are connected to the invented BRGs **1441, 1442, 1443** and **1444**. The BRGs **1441**, **1442, 1443** and **1444** are connected to the premises LAN segment. A DGIP host **1461** and two LIP hosts **1471** and **1472** are connected the premises LAN segment. Actually a CMTS edge is very similar to the MDU LAN segment. The edge router **1412** is the default gateway for the DGIP host and the local interface **14161** of the NAT box **14160** is the default gateway for the LIP hosts, just as we have discussed for the case of a MDU LAN. The CMTS is not a simple data link layer equipment but a highly intelligent one, and usually filters the source IP address for the upstream packets and the destination IP address for the down stream packets. That is, the CMTS prevents end users from using illegitimate addresses. Thus it is necessary to set the CMTS to allow the LIP hosts to make a GIP-and-LIP multi-subnet CMTS segment.

### FIFTH EXEMPLARY EMBODIMENT

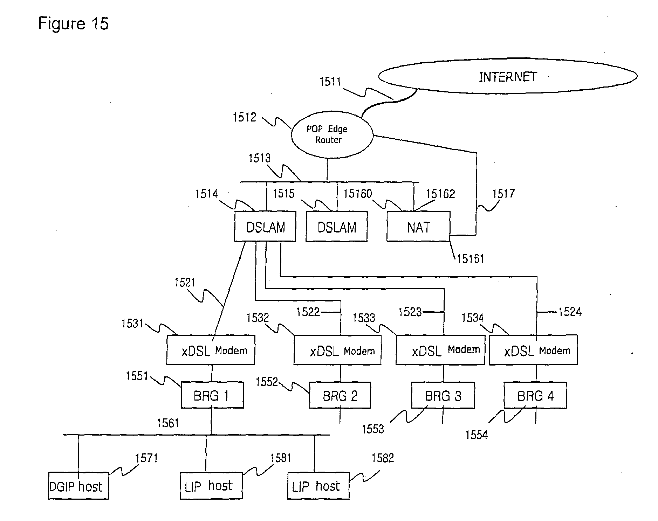

Fig. 15 is another application of the second embodiment, applied to the xDSL segment. Currently there are three types of xDSL technology widely used. First and the oldest one is the ATM (Asynchronous Transfer Mode) ADSL (Asymmetric Digital Subscriber Line). Second is the IP ADSL. Third is the VDSL (Very high speed Digital Subscriber Line). Fig. 15 shows an application of the IP ADSL and VDSL.

For ATM ADSL, a NAS (Network Access Server) is deployed between DSLAM (Digital Subscriber Line Access Multiplexer) and the router and the NAT box should be located between the NAS and the router. And the communication between the NAS and the modem uses ATM; thus it is necessary to set the PVC (Permanent Virtual Circuit) to allow the LIP packets to pass through the NAS, to the NAT box. Since the detailed method to enable the ATM ADSL segment to function as a multi-subnet edge is rather irrelevant to this disclosure, Fig. 15 which shows the case with the IP ADSL segment or the VDSL segment, would suffice for the xDSL segment.

Usually an ISP's local office where the communication equipments are operated is called POP (Point-of-Presence). In the POP, there is an edge router **1512**, a LAN segment **1513**, a plurality of DSLAM **1514** and **1515** and the NAT box **15160**. Phone lines **1521, 1522, 1523** and **1524** are connecting the DSLAMs to the premises modems. For the clarity of understanding, telephone switches and phones are not shown in this figure.

Modems **1531, 1532, 1533** and **1534** are connected to the LAN segment and the edge interface of the invented BRG is connected to the corresponding modem, while the premises interface of the invented BRGs **1531, 1532, 1533** and **1534** are connected to the premises LAN segment **1561**. To the premises LAN are connected a GIP host **1571** and two LIP hosts **1581** and **1582**.

The default gateway for the GIP host **1571** is the router and the default gateway for the LIP hosts **1581** and **1582** is the local interface **15161** of the NAT box **15160.**

Now it has become clear that the second embodiment of the invention is applicable to the CMTS segment and the xDSL segment as well as to the MDU LAN.

As we have discussed, the first embodiment is for a single account multi-subnet edge network on a single data link layer segment. And the second, the third, the fourth and the fifth embodiments are for a multi-account multi-subnet edge network.

For a large, single account edge, the benefit of the invention, as has been discussed in the first embodiment, is mainly to reduce the network administration job. When the first embodiment is applied, since the premises LIP and GIP hosts believe that they belong to the same subnet, they can communicate with each other, without intra-edge routing. This can reduce the network administration job significantly.

The second, third, forth, and fifth embodiments relate to the multi-account edge network and the invention is to deploy BRG with the invented DHCP proxy server and the invented subnet-aware ARP proxy server and, to deploy the NAT box with the invented auxiliary DHCP relay module. The benefits of the second, third, forth, and fifth embodiments of the invention are as follows:
First, the ISP can provide a LIP connectivity services as well as a DGIP connectivity service, without using the GIP address for the residential gateway;
Second, the ISP can define, provide and manage multiple categories of LIP connectivity services, at affordable prices;
Third, the ISP can configure the BRG with a LIP address and manage it from remote;
Forth, from the user's point of view, the premises GIP and LIP hosts are fully interoperating without intra-edge or intra-premises routing;
Fifth, a user do not need to reconfigure a host to change its IP address type or its connectivity service category; he/she simply changes the PHIMT information and the DHCP proxy sever in the BRG changes the configuration within a few seconds, even though the original lease time by the original DHCP server is comparatively very long; and
Sixth, the existing equipments such as routers, original DHCP servers, DSLAMS, switches, CMTS and modems can be used and even the existing settings can be preserved.

While the present invention has been shown and described with reference to certain preferred embodiments thereof, it will be understood by those skilled in the art that various changes in form and details may be made therein without departing from the spirit and scope of the invention as defined by the appended claims.

## Claims

1. A communication device comprising a DHCP proxy server for enabling an intra-edge routing-less IP communication among a plurality of premises hosts including DGIP hosts and LIP hosts in a multi-subnet edge network on a single LAN segment, said single LAN segment being comprised of an edge router, a NAT box and said plurality of premise DGIP and LIP hosts,
wherein said communication device with said DHCP proxy server is installed in said single LAN segment and said DHCP proxy server manipulates and falsifies subnet mask of said plurality of premises DGIP hosts and LIP hosts, the falsified subnet mask signifying unrealistic and abnormally large subnet to the effect that said plurality of premises GIP hosts and LIP hosts believe that they belong to the same subnet, where the falsified, abnormal subnet mask is named as "super mask" and the falsified subnet is named as "falsified super subnet" .

2. The communication device in accordance with claim 1, wherein said DHCP proxy server comprises:
a table in which there is stored the following information such as a type of IP connectivity to be provided for each host of a plurality of client premises hosts which broadcast a DHCP message and a type of IP address to be configured with each host of said plurality of client premises hosts and optionally an IP address value to be assigned to each host of said plurality of client premises hosts, wherein said type of IP connectivity, said type of IP address and said IP address value are set by using MAC addresses of said plurality of client premises hosts as a key value, based upon an IP assignment policy setting of a network administrator;
means for receiving said DHCP message from at least one of said plurality of client premises hosts and recognizing said IP address type to be assigned to said client host with reference to said table;
means for assigning a LIP address with said falsified super mask to said client host by selecting said LIP address from a LIP address pool empowered to be managed by said IP assignment policy setting of the network administrator, when said client host is recognized as a host to be configured with the LIP address;
means for forwarding said DHCP message of DHCP Discover and Request from said client host to said original DHCP server remotely installed when said client host is recognized as a host to be configured with the DGIP address;
means for changing the subnet mask of said IP configuration information included in said DHCP message of Ack provided from said original DHCP server, into said super mask larger than said subnet mask value; and
means for configuring said client host set for DGIP configuration, using the changed IP configuration information including said super mask.

3. The communication device in accordance with claim 2, wherein said DHCP proxy server comprises means for changing a DHCP server ID, which is an IP address, contained in said DHCP message of Ack provided from said original DHCP server, into an IP address of said DHCP proxy server itself.

4. The communication device in accordance with claim 3, wherein said DHCP proxy server comprises means for setting and applying a PLT (Premises Lease Time) which is adopted for said DHCP proxy server, said PLT being shorter than an OLT (Original Lease Time) which is adopted for said original DHCP server.

5. The communication device in accordance with claim 4, wherein said DHCP proxy server comprises means for setting and applying CET (Caching Expiration Time) within which said DHCP proxy server blocks a DHCP lease renewal Request from said DGIP client host and gives a message of Ack on its own.

6. The communication device in accordance with claim 5, wherein said CET is a half of said OLT.

7. The communication device in accordance with any one of claim 1 through claim 6, further comprising a gateway for connecting said plurality of client premises DGIP hosts to said edge router and for connecting said plurality of client premises LIP hosts to said NAT box, and wherein said DHCP proxy server resides in said gateway.

8. The communication device in accordance with claim 7, wherein said gateway is a bridge residential gateway.

9. The communication device in accordance with claim 7, wherein number of said gateways is plural number in said single edge LAN segment and each gateway has its own premises LAN segment.

10. The communication device in accordance with claim 9, wherein said NAT box comprises a LIP interface for communication with said plurality of gateways, a GIP interface for communication with said original DHCP server and an auxiliary DHCP relay module for conveying said DHCP message between said gateways which are configured with LIP addresses and said original DHCP server via said LIP interface of said NAT box and via the GIP interface of said NAT box and wherein said NAT box is installed on said edge LAN segment.

11. The communication device in accordance with claim 10, wherein said NAT box comprises means for using a data link layer broadcast address or a MAC address of said gateway as a data link layer destination of the downstream DHCP packets, when relaying said DHCP messages from said original DHCP server to said plurality of gateways, on the condition that each of said plurality of gateways comprises a DLAT (Data Link Layer Translation) module for translating a source MAC address of the upstream packets to a MAC address of one of said plurality of gateways and for translating a destination MAC address of a downstream packets to a MAC address of a destination premises host.

12. The communication device in accordance with any one of claim 1 through claim 6, further comprising a subnet-aware ARP proxy server which is capable of being aware of true subnets of said plurality of client premises hosts including said DGIP hosts and LIP hosts and aware of the MAC addresses of default gateways of said plurality of client premises hosts, for virtually recovering said true subnets decided by said subnet mask when said plurality of client premises hosts wrongfully broadcast ARP Requests for a remote host misunderstood to exist in the same subnet owing to said super mask configured by said DHCP proxy server, by giving said MAC address of said default gateway corresponding to one of said plurality of client premises hosts.

13. The communication device in accordance with claim 12, wherein subnet-aware ARP proxy server comprises:
means for acquiring said true subnets of said plurality of client premises hosts;
means for acquiring MAC addresses of default gateways for each of said plurality of client premises hosts;
means for recognizing whether said ARP Request is for a remote host misunderstood to exist in the same subnets; and
means for giving said MAC address of default gateways for said plurality of client premises hosts to corresponding client premises host, when said corresponding client premises host broadcasts a wrongful ARP Request for said remote host.

14. The communication device in accordance with claim 13, further comprising a gateway for connecting said plurality of client premises hosts of DGIP hosts to said edge router and for connecting said plurality of client premises hosts of LIP hosts to said NAT box and wherein said subnet-aware ARP proxy server resides in said gateway.

15. The communication device in accordance with claim 13, further comprising a gateway for connecting said plurality of client premises hosts of DGIP hosts to said edge router and for connecting said plurality of client premises hosts of LIP hosts to said NAT box and wherein said DHCP proxy server and said subnet-aware ARP proxy server reside in said gateway.

16. The communication device in accordance with claim 15, wherein said gateway is a bridge residential gateway.

17. A method for enabling an intra-edge routing-less premises IP communication, in a multi-subnet edge network on a single LAN segment, said single LAN segment being comprised of an edge router, a NAT box and a plurality of client premises DGIP hosts and LIP hosts connected to said edge LAN segment, said method comprising the steps of:
a) broadcasting DHCP message by at least one of said plurality of clients premises hosts, and configuring said at least one of said plurality of clients premises hosts, by a DHCP proxy server, using a LIP address with a falsified super mask from the LIP pool which said DHCP proxy server is empowered to manage, when said client host is to be configured with said LIP address and forwarding said DHCP messages, by said DHCP proxy server, to said original DHCP server, when said client host is to be configured with a DGIP address;
b) recording, by said DHCP proxy server, in a table, a DHCP response message of Ack provided from said original DHCP server in response to said DHCP message, changing a subnet mask value, by said DHCP proxy server, to said super mask larger than said subnet mask value, and configuring said client host, by said DHCP proxy server, using a changed IP configuration information including said super mask; and
c) communicating with a target destination host by said client host.

18. The method in accordance with claim 17, wherein said step a) comprises the sub-steps of:
a-i) finding out a type of IP address to be assigned to a source host based on a table residing in said DHCP proxy server, in said table there is stored such information as a type of IP connectivity to be configured with each host of said plurality of client premises hosts and said type of IP address and optionally an IP address value to be assigned to each host of said plurality of client premises hosts, wherein said type of IP connectivity, said type of IP address and said IP address value are set by using MAC addresses of said plurality of client premises hosts as a key value, based upon an IP assignment policy setting of a network administrator;
a-ii) assigning said LIP address with said falsified super mask to the client host, when said client host is to be configured with the LIP address, wherein said LIP address assigned to said LIP host is selected from a LIP address pool allocated to said DHCP proxy server, by said network administrator;
a-iii) forwarding said DHCP message to said original DHCP server when said client host is to be configured with the DGIP address;

19. The method in accordance with claim 17 or claim 18, wherein said step b) comprises the sub-steps of:
b-i) setting and applying at said original DHCP server a lease time (OLT: original lease time)
b-ii) receiving at said DHCP proxy server a DHCP response message of Ack from said original DHCP server and changing said subnet mask of said IP configuration information contained in said response DHCP message of Ack to said super mask larger than said subnet mask; and
b-iii) configuring said client host using the manipulated IP configuration information including said super mask, wherein said client host is set to be configured with the DGIP address.

20. The method in accordance with claim 19, further comprising a sub-step of changing a DHCP server ID, which is an IP address, contained in said DHCP response message of Ack provided from said original DHCP server, into an IP address of said DHCP proxy server itself, between said sub-step b-ii) of said step b) and said sub-step b-iii) of said step b).

21. The method in accordance with claim 19, further comprising a step of applying a much shorter PLT (Premises Lease Time) which is adopted for said DHCP proxy server itself, than said OLT (Original Lease Time) which is adopted for said original DHCP server, in said sub-step b-ii) of said step b).

22. The method in accordance with claim 21, further comprising a step of setting and applying of CET (Caching Expiration Time) within which said DHCP proxy server blocks a DHCP lease renewal Request from said DGIP client host and gives a message of Ack on its own in said sub-step b-ii) of said step b), to the effect of replacing said sub-step a-iii) of said step a).

23. The method in accordance with any one of claim 17 through claim 21, wherein said step c) comprises the sub-steps of:
c-i) broadcasting ARP Request, by a source host, for a target destination covered by said super mask;
c-ii) deciding, by a subnet-aware ARP proxy server, whether said target destination is in the true subnet of said source host decided by said subnet mask under the condition that said subnet-aware ARP proxy server is aware of subnets decided by said subnet mask and said super mask;
c-iii) informing said source host, by said subnet-aware ARP proxy server, of a MAC address of a default gateway of said source host in response to said ARP Request, in case where said ARP Request is for a remote host misunderstood to exist in the subnet decided by said subnet mask, thanks to said super mask; and
c-iv) making a packet, by said source host, using said MAC address of default gateway of said source host as a data link layer destination and using an IP address of said target destination as the network layer destination, and said source host sending said packet via said default gateway of said source host to said target destination.

24. The method in accordance with claim 19, further comprising a step of relaying said DHCP message between said plurality of gateways which are configured with LIP addresses and said original DHCP server which is a remote host, in said step a-iii) and said step b-ii).

25. The method in accordance with claim 24, further comprising a step of using, by said NAT box with said auxiliary DHCP relay module, either data link layer broadcast address or the MAC addresses of said plurality of gateways as the destination address of the downstream DHCP packet's from said original DHCP server, in case where each of said plurality of gateways translates data link layer address of upstream packet to its own and data link layer address of downstream packet to the addresses of said client premises hosts, in said step a-iii) and said step b-ii).
